# FASCICULE DE BREVET EUROPEEN

(11) **EP 3 634 911 B1**
(45) Date de publication et mention de la délivrance du brevet: **01.11.2023**
(21) Numéro de dépôt: 18737659.5
(22) Date de dépôt: 06.06.2018
(51) Int. Cl.: C01G 55/00

(54) **MATÉRIAU POREUX SOUS LA FORME DE MICROSPHÈRES À BASE D'IRIDIUM ET/OU D'OXYDE D'IRIDIUM, SON PROCÉDÉ DE PRÉPARATION ET SES UTILISATIONS**
PORÖSE MATERIALEN GEBILDET AUS MIKROSPHEREN AUF BASIS VON IRIDIUM UND/ODER IRIDIUM OXID, DESSEN HERSTELLUNGSVERFAHREN UND ANWENDUNGEN
POROUS MATERIALS FORMED OF IRIDIUM AND/OR IRIDUM OXIDE BASED MICROSPHERES, ITS PREPARATION PROCESS AND ITS USES

(30) Priorité: 06.06.2017 FR 1755006
(43) Date de publication de la demande: 15.04.2020
(73) Titulaire: Sorbonne Université, 75006 Paris 6 (FR); Centre National de la Recherche Scientifique, 75016 Paris (FR); Université Paris Cité, 75006 Paris (FR)
(72) Inventeur: FAUSTINI, Marco, 75005 Paris (FR); BOISSIERE, Cédric, 91140 Villebon Sur Yvette (FR); PERON, Jennifer, 75005 Paris (FR); TARD, Cédric, 94400 Vitry-Sur-Seine (FR); GIRAUD, Marion, 75005 Paris (FR); JONES, Deborah, 34380 Saint Martin De Londres (FR)
(74) Mandataire: Ipsilon
(86) Numéro de dépôt international: PCT/FR2018/051302
(87) Numéro de publication internationale: WO 2018/224771

(56) Documents cités:
- OSAKA A ET AL: "Iridium oxide films via sol-gel processing", JOURNAL OF NON-CRYSTALLINE SOLIDS, NORTH-HOLLAND PHYSICS PUBLISHING. AMSTERDAM, NL, vol. 178, 3 novembre 1994 (1994-11-03), pages 313-319, XP024060443, ISSN: 0022-3093, DOI: 10.1016/0022-3093(94)90300-X [extrait le 1994-11-03]
- MARSHALL A ET AL: "Iridium oxide-based nanocrystalline particles as oxygen evolution electrocatalysts", RUSSIAN JOURNAL OF ELECTROCHEMISTRY, NAUKA/INTERPERIODICA, MO, vol. 42, no. 10, 1 octobre 2006 (2006-10-01), pages 1134-1140, XP019437596, ISSN: 1608-3342, DOI: 10.1134/S1023193506100223
- SEONG JUNG KWON ET AL: "Observing Iridium Oxide (IrO x ) Single Nanoparticle Collisions at Ultramicroelectrodes", JOURNAL OF THE AMERICAN CHEMICAL SOCIETY, vol. 132, no. 38, 29 septembre 2010 (2010-09-29), pages 13165-13167, XP055443428, US ISSN: 0002-7863, DOI: 10.1021/ja106054c

## Description

L'invention concerne un matériau poreux sous la forme de microsphères à base d'iridium et/ou d'oxyde d'iridium, son procédé de préparation, son utilisation comme catalyseur anodique dans un électrolyseur d'eau basé sur un électrolyte polymère solide, également appelé électrolyseur à eau PEM (avec PEM signifiant en anglais « Proton Exchange Membrane » ou « Polymer Electrolyte Membrane) ou pour la fabrication de diodes électroluminescentes pour divers appareils électroniques ou pour les automobiles, et un électrolyseur à eau PEM comprenant un tel matériau à titre de catalyseur anodique.

L'invention s'applique typiquement, mais non exclusivement, à la production d'hydrogène à partir de ressources renouvelables, et en particulier aux matériaux à base d'iridium et/ou d'oxyde d'iridium utilisés à titre de catalyseurs pour produire de l'hydrogène.

Le gaz dihydrogène H₂, plus communément appelé « hydrogène », peut être utilisé dans diverses applications en raison de son fort potentiel énergétique. N'existant pas à l'état naturel, il doit être fabriqué à partir d'une source d'énergie primaire, puis transporté, stocké et distribué vers l'utilisateur.

L'hydrogène comme source d'énergie peut être converti en électricité, en chaleur ou en force motrice selon l'usage final. L'hydrogène peut en particulier être utilisé pour alimenter des piles à combustible qui constituent alors des convertisseurs électrochimiques qui produisent électricité et chaleur par oxydation d'un combustible gazeux qui est l'hydrogène et par réduction d'oxygène. Les piles à combustible alimentées par de l'hydrogène peuvent être utilisées dans des systèmes stationnaires dans les domaines de l'habitat, de l'industrie et des réseaux et dans des systèmes mobiles dans le domaine des transports et des appareils portables (téléphones, ordinateurs). L'utilisation de l'hydrogène comme vecteur énergétique principal et carburant pourrait contribuer d'une part à la réduction de la dépendance globale envers les énergies fossiles et d'autre part à la diminution des émissions des gaz à effet de serre (CH₄, CO₂) et de la pollution atmosphérique (CO, NO_{R}).

Aujourd'hui, l'hydrogène est essentiellement produit par reformage de gaz naturels ou d'hydrocarbures tels que le propane, l'essence, le gazole, le méthanol ou l'éthanol ; ou par gazéification de résidus pétroliers ou de charbon. L'inconvénient de ces procédés est qu'ils font intervenir des ressources fossiles et produisent généralement de l'hydrogène ayant une faible pureté (e.g. présence de monoxyde de carbone, dioxyde de carbone, composés soufrés, ou d'autres impuretés gazeuses).

Afin de répondre à des besoins industriels constants en termes de nouvelles technologies et à des contraintes environnementales et économiques, un intérêt croissant s'est alors manifesté pour la conversion électrochimique de l'eau en hydrogène et oxygène par électrolyse de l'eau, ce mode de production étant propre et fournissant de l'hydrogène de pureté élevée. Le premier électrolyseur d'eau basé sur un électrolyte polymère solide ou électrolyseur d'eau PEM a vu le jour dans les années 1960 et a été développé par General Electric. Il constitue un des dispositifs les plus prometteurs de par les hautes densités de courant atteintes (i.e. de l'ordre de 2A/cm² ou plus). Un électrolyseur d'eau PEM comprend généralement deux électrodes (anode et cathode) reliées à un générateur de courant continu, et séparées par un électrolyte (milieu conducteur ionique) constitué d'une membrane polymère échangeuse de protons qui est également un isolant électronique peu perméable aux gaz. Des catalyseurs déposés sur les électrodes favorisent les réactions. En particulier, les catalyseurs utilisés dans les électrolyseurs PEM doivent résister à l'environnement acide provoqué par l'utilisation d'une membrane polymère échangeuse de protons (e.g. la membrane Nafion^{®} est la plus couramment utilisée), mais aussi aux potentiels élevés surtout lors du fonctionnement à forte densité de courant. Or, seuls les métaux nobles (e.g. Pt, Ru, Ir), donc rares et onéreux, peuvent résister aux conditions précitées. Par ailleurs, l'anode est le siège de la réaction d'oxydation de l'eau en oxygène. La surtension anodique est la cause principale d'irréversibilité dans un électrolyseur d'eau PEM. Il est donc important que le catalyseur à l'anode permette de réduire ces surtensions afin de diminuer l'énergie nécessaire à l'électrolyse. Ainsi, certaines recherches se sont concentrées sur la mise à disposition de nouveaux catalyseurs à l'anode qui présentent un coût de production diminué (de par leur procédé de production et/ou la charge en métaux nobles à l'anode), tout en garantissant de bonnes performances catalytiques en termes de durée de vie et/ou de stabilité et/ou d'activité catalytique « proprement dite ». Les catalyseurs à base d'oxyde d'iridium apparaissent comme des catalyseurs de choix combinant activité et stabilité.

La synthèse d'IrO₂ nécessite généralement deux étapes : lors d'une première étape, de l'iridium amorphe sous la forme d'oxyde, d'hydroxyde ou de métal est préparé, puis lors d'une deuxième étape l'iridium obtenu est chauffé notamment à 500°C afin de permettre l'oxydation complète et la cristallisation d'IrO₂. Des nanoparticules d'iridium ont déjà été préparées par divers procédés tels que le procédé thermique d'Adams, la voie polyol, la synthèse Pechini, la méthode sol-gel ou la méthode hydrolytique. La plupart des synthèses actuellement proposées conduisent généralement à des particules agglomérées, ce qui ne permet pas d'utiliser toute la matière active, induisant des charges élevées en catalyseur allant jusqu'à 3 mg/cm² au niveau de l'anode. Le procédé d'Adams conduit à des particules à morphologie irrégulière, des rendements faibles et produit des gaz toxiques d'oxyde nitrique, induisant l'utilisation d'appareils spécifiques pour mettre en oeuvre ledit procédé. D'autres méthodes conduisent à des films poreux pour améliorer les performances dans un électrolyseur. Toutefois, les techniques de dépôt employées (e.g. pulvérisation cathodique) ne permettent pas de préparer des couches de catalyseur utilisables dans les électrolyseurs.

Par ailleurs, la demande de brevet JP2014/073467 a décrit la préparation d'un matériau mésoporeux constitué d'oxyde d'iridium comprenant la préparation d'une solution comprenant un chlorure d'iridium, de l'eau, éventuellement une base, et un agent porogène de type polyéther (e.g. polyéther commercialisé sous la référence Pluronic^{®} F-127), l'évaporation d'au moins une partie de l'eau de la solution, et une étape de calcination à une température variant de 300 à 530°C environ. L'oxyde d'iridium est utilisé comme catalyseur anodique dans un électrolyseur. Toutefois, les performances électrochimiques d'un tel matériau ne sont pas optimisées (i.e. le potentiel à partir duquel du courant commence à être délivré est très élevé, notamment supérieur à 1,8 V pour une densité de courant de 2 mA/cm²). Par ailleurs, le caractère mésoporeux limite l'évacuation de l'oxygène produit à l'anode pendant l'électrolyse, notamment lorsque l'électrolyse est effectuée à des densités de courant élevées et/ou à de fortes pressions qui induisent la génération d'une quantité importante d'oxygène en peu de temps.

Enfin, l'iridium ou l'oxyde d'iridium obtenu est généralement sous la forme d'une poudre de particules nanométriques. Or, la manipulation de nanoparticules sous forme de poudre pose des problèmes d'hygiène et de sécurité (cf. Sharifi et al., Chem. Soc. Rev., 2012, 41, 2323-2343), et fait actuellement souvent l'objet d'un rejet systématique de la part des industriels. En effet, il a déjà été constaté que les nanoparticules se déposent dans les voies pulmonaires profondes dans des proportions plus importantes que les particules de grande taille. Une activité physique intense augmente ce dépôt. Un coup de soleil ou des lésions sur la peau suffirait à permettre le passage de la barrière dermique par les nanoparticules et enfin, les nanoparticules peuvent transporter des contaminants connus pouvant conduire ensuite, même à faible dose, à un effet toxique avéré (par exemple à une altération masquée de l'ADN). D'un point de vue industriel, la manipulation et la formation de nanoparticules peut également conduire au colmatage des appareils.

Ainsi, le but de la présente invention est de pallier en tout ou partie les inconvénients de l'art antérieur et de fournir un matériau économique à base d'iridium, ayant une toxicité réduite pour l'environnement, les manipulateurs et les utilisateurs, pouvant être facilement manipulé, et présentant des performances catalytiques améliorées ou pour le moins similaires par rapport à celles des matériaux de l'état de l'art, notamment en termes de stabilité et d'activité, ledit matériau pouvant être utilisé avec un taux de charge réduit dans un électrolyseur d'eau PEM et pouvant faciliter l'évacuation de l'oxygène produit à l'anode pendant l'électrolyse.

Un autre but de l'invention est de fournir un procédé simple, facilement industrialisable, économique et respectueux de l'environnement de préparation d'un matériau à base d'iridium ayant une toxicité réduite pour l'environnement, les manipulateurs et les utilisateurs, pouvant être facilement manipulé, et présentant des performances catalytiques améliorées ou pour le moins similaires par rapport à celles des matériaux de l'état de l'art, notamment en termes de stabilité et d'activité, ledit matériau pouvant être utilisé avec un taux de charge réduit dans un électrolyseur d'eau PEM et pouvant faciliter l'évacuation de l'oxygène produit à l'anode pendant l'électrolyse.

Ces buts sont atteints par l'invention qui va être décrite ci-après.

L'invention a donc pour premier objet un matériau inorganique comprenant de l'iridium et/ou de l'oxyde d'iridium IrO₂, caractérisé en ce qu'il est macroporeux et qu'il se présente sous la forme de sphères microniques ou sub-microniques.

Le matériau de l'invention est économique, a une toxicité réduite pour l'environnement, les manipulateurs et les utilisateurs, il peut être facilement manipulé (de par sa taille micrométrique ou sub-micrométrique), et il présente des performances catalytiques améliorées ou pour le moins similaires par rapport à celles des matériaux de l'état de l'art, notamment en termes de stabilité et d'activité. En particulier, le matériau de l'invention possède de bonnes propriétés catalytiques dans des conditions de fonctionnement d'un électrolyseur à forte densité de courant (e.g. supérieure ou égale à 2A/cm²). Par ailleurs, il peut être utilisé avec un taux de charge réduit dans un électrolyseur d'eau PEM et il peut faciliter l'évacuation de l'oxygène produit à l'anode pendant l'électrolyse.

Dans l'invention, l'expression « micronique ou sub-micronique » signifie que les sphères présentent un diamètre moyen dans les gammes microniques à sub-microniques. En particulier, leur diamètre moyen peut varier d'une centaine de nanomètres à quelques dizaines de micromètres.

Dans l'invention, le matériau inorganique se présente sous la forme de sphères. En d'autres termes, les particules formant le matériau possèdent avantageusement une géométrie externe sphérique ou sphéroïdale. Par sphéroïdale, on entend toute géométrie issue de la déformation d'une sphère.

Le matériau de l'invention possède une porosité organisée et une structure hiérarchique, lui conférant les propriétés et avantages précités.

Selon une forme de réalisation préférée de l'invention, les sphères présentent un diamètre moyen (en nombre) d'au moins 100 nm environ, de préférence variant de 100 nm à 40 µm environ, de préférence encore de 150 nm à 3 µm environ, et de préférence encore de 200 nm à 2 µm environ.

Dans l'invention, le diamètre moyen (en nombre) des sphères du matériau est mesuré à partir des diamètres individuels d'une assemblée de sphères (minimum 800) sur un ou plusieurs clichés de microscopie électronique à balayage (MEB).

Les sphères du matériau de l'invention sont de préférence individuelles. En d'autres termes, les sphères ne sont pas auto-assemblées ou elles ne sont pas liées entre elles. Le matériau n'est donc pas sous la forme d'une structure compacte, mais sous la forme de sphères microniques ou sub-microniques individuelles. Les sphères de l'invention ne sont pas non plus de préférence agglomérées.

Dans un mode de réalisation particulier, les sphères du matériau de l'invention ont une paroi externe d'épaisseur moyenne variant de 5 nm à 6 µm environ, de préférence de 50 nm à 250 nm environ, et de préférence encore de 100 nm à 200 nm environ.

Il va de soi que l'épaisseur de la paroi externe d'une sphère donnée est inférieure au diamètre de ladite sphère.

Le matériau de l'invention étant macroporeux, il comprend des macropores de taille moyenne supérieure à 50 nm environ.

Les macropores peuvent être à une distance l'un de l'autre comprise entre 75 nm et 2 µm environ, de préférence comprise entre 100 nm et 800 nm, et de préférence encore comprise entre 100 nm et 200 nm, la distance étant mesurée du centre d'un premier macropore au centre d'un deuxième macropore adjacent au premier macropore.

Le matériau peut comprendre en outre des mésopores, c'est-à-dire des pores de taille moyenne variant de 2 nm à 50 nm environ.

La présence de macropores et éventuellement de mésopores permet de maximiser la surface active permettant de catalyser la réaction de dissociation de l'eau. Les macropores facilitent le transport de l'eau et les mésopores, si elles existent, participent au transport des gaz.

En particulier, les sphères du matériau de l'invention sont macroporeuses. La macroporosité des sphères du matériau de l'invention peut être ouverte et/ou fermée.

La macroporosité des sphères du matériau de l'invention peut être centrale et/ou surfacique (i.e. présence de macropores centraux et/ou surfaciques).

Le matériau de l'invention peut avoir une surface spécifique, calculée par la méthode B.E.T., d'au moins 6 m²/g environ, de préférence d'au moins 10 m²/g environ, de préférence variant de 20 à 200 m²/g environ, de préférence encore variant de 20 à 150 m²/g environ, de préférence encore variant de 30 à 120 m²/g environ, et de préférence encore variant de 30 à 70 m²/g environ.

Lorsque le matériau comprend uniquement de l'iridium à titre de métal, il a de préférence une surface spécifique, calculée par la méthode B.E.T., variant de 20 à 150 m²/g environ, et de préférence encore variant de 30 à 70 m²/g environ.

Lorsque le matériau comprend de l'iridium à titre de métal et un ou plusieurs autres métaux M tels que cités ci-après, il a de préférence une surface spécifique, calculée par la méthode B.E.T., variant de 20 à 200 m²/g environ, et de préférence encore variant de 30 à 120 m²/g environ.

Le matériau de l'invention peut avoir un volume macroporeux d'au moins 0,10 cm³/g environ, de préférence variant de 0,15 à 2 cm³/g environ, et de préférence encore variant de 0,20 à 1,6 cm³/g environ.

Le matériau de l'invention peut avoir un taux de porosité d'au moins 20% en volume environ, par rapport au volume total du matériau.

Le matériau peut présenter un indice de polydispersité d'au moins 0,4 environ, de préférence d'au moins 0,45 environ, de préférence encore variant de 0,5 à 2,0, et de préférence encore variant de 0,55 à 1,1. Cette polydispersité moyenne est favorable pour augmenter la surface d'échange du matériau, favoriser la percolation et améliorer la circulation des gaz lors de l'électrolyse.

Dans l'invention, l'indice de polydispersité du matériau est calculé à partir des images du matériau par microscopie électronique à balayage (MEB) qui fournit une déviation standard adimensionnée. La mesure de la dispersion de taille peut s'effectuer en calculant la déviation standard adimensionnée qui est le rapport de la déviation standard de la distribution de taille sur le diamètre moyen à partir d'un histogramme de taille obtenu par mesure des diamètres individuels d'une assemblée de sphères (minimum 800) sur un ou plusieurs cliché MEB.

Les sphères du matériau de l'invention peuvent être choisies parmi :
- des sphères pleines macroporeuses (et éventuellement mésoporeuses) à paroi externe macroporeuse (et éventuellement mésoporeuse), éventuellement en mélange avec des sphères creuses macroporeuses (et éventuellement mésoporeuses) à paroi externe macroporeuse (et éventuellement mésoporeuse),
- des sphères creuses macroporeuses à paroi externe dense (i.e. non poreuse), et
- des sphères creuses macroporeuses (et éventuellement mésoporeuses) à doubles parois interne et externe macroporeuses (et éventuellement mésoporeuses), éventuellement en mélange avec des sphères pleines macroporeuses (et éventuellement mésoporeuses) à paroi externe macroporeuse (et éventuellement mésoporeuse), et éventuellement en mélange avec des sphères creuses macroporeuses (et éventuellement mésoporeuses) à paroi externe macroporeuse (et éventuellement mésoporeuse).

Lorsque les sphères sont des sphères pleines macroporeuses à paroi externe macroporeuse, la macroporosité est généralement centrale, surfacique et ouverte.

Lorsque les sphères sont des sphères pleines macroporeuses à paroi externe macroporeuse, les macropores ont une taille moyenne allant de 51 nm à 1 µm, et de préférence de 100 nm à 600 nm environ.

Lorsque les sphères sont des sphères creuses macroporeuses à doubles parois interne et externe macroporeuses, la macroporosité est généralement centrale et fermée, et surfacique et ouverte.

Lorsque les sphères sont des sphères creuses macroporeuses à doubles parois interne et externe macroporeuses, les macropores des parois interne et externe ont une taille moyenne allant de 51 nm à 1 µm, et de préférence de 100 nm à 600 nm environ et les macropores centraux ont une taille moyenne allant de 100 nm à 4 µm, de préférence de 200 nm à 3 µm environ, et de préférence encore de 400 nm à 2 µm environ.

En particulier, la taille moyenne d'un macropore central correspond au diamètre moyen d'une sphère auquel on retranche 2 fois l'épaisseur de sa paroi externe, 2 fois l'épaisseur de sa paroi interne et deux fois l'épaisseur de l'espace entre ses parois interne et externe.

Lorsque les sphères sont des sphères creuses macroporeuses à paroi externe dense, la macroporosité est généralement centrale et fermée.

En particulier, la taille moyenne d'un macropore correspond au diamètre moyen d'une sphère auquel on retranche 2 fois l'épaisseur de sa paroi externe.

Lorsque les sphères sont des sphères creuses macroporeuses à paroi externe dense, les macropores centraux ont une taille moyenne allant de 100 nm à 4 µm, de préférence de 200 nm à 3 µm environ, et de préférence encore de 400 nm à 2 µm environ.

Lorsque les sphères sont des sphères creuses macroporeuses à paroi externe macroporeuse, la macroporosité est généralement centrale, et surfacique et ouverte.

En particulier, la taille moyenne d'un macropore correspond au diamètre moyen d'une sphère auquel on retranche 2 fois l'épaisseur de sa paroi externe.

Des sphères pleines macroporeuses (et éventuellement mésoporeuses) à paroi externe macroporeuse (et éventuellement mésoporeuse), éventuellement en mélange avec des sphères creuses macroporeuses (et éventuellement mésoporeuses) à paroi externe macroporeuse (et éventuellement mésoporeuse), sont particulièrement préférées. En effet, elles conduisent à un matériau plus stable présentant une résistance mécanique améliorée, notamment lorsqu'il est utilisé dans un électrolyseur à titre de catalyseur, en particulier lorsque des densités de courant élevées sont mises en oeuvre. Elles conduisent également à un matériau assurant une meilleure gestion des gaz produits lors de l'électrolyse.

Dans l'invention, la taille moyenne des mésopores du matériau est calculée à partir de la distribution de taille des mésopores obtenue par physisorption d'azote en utilisant les méthodes B.E.T et B.J.H.

La taille moyenne des macropores du matériau est calculée à partir la distribution de taille des macropores obtenue par microscopie électronique à balayage (macroporosité surfacique) et/ou obtenue par combinaison de la granulométrie laser en phase liquide et de la microscopie électronique à balayage (macroporosité centrale).

L'iridium (respectivement l'oxyde d'iridium) du matériau de l'invention peut être dans la phase amorphe, cristalline, ou comprendre un mélange de phases amorphe et cristalline, ou de préférence être dans la phase amorphe ou comprendre un mélange de phases amorphe et cristalline. Dans ce dernier cas, cela permet ainsi d'améliorer les performances catalytiques du matériau de l'invention puisque le système obtenu présente une chimie de surface moins figée.

La phase cristalline de l'iridium, si elle existe, a une structure de type cfc (cubique face centrée).

La phase cristalline de l'oxyde d'iridium, si elle existe, a une structure de type rutile.

En particulier, le matériau de l'invention comprend au moins une partie de l'iridium ou de l'oxyde d'iridium dans la phase amorphe.

Le matériau de l'invention comprend de préférence de l'oxyde d'iridium éventuellement en mélange avec de l'iridium métallique. En effet, cela permet de conduire à un matériau ayant des performances catalytiques améliorées (liées à la présence d'oxyde d'iridium plus actif que l'iridium métallique), tout en garantissant une conduction électronique améliorée (liée à la présence d'iridium métallique).

Le matériau de l'invention peut en outre comprendre au moins un métal M et/ou un oxyde de métal M, ledit métal M étant différent de l'iridium, notamment choisi parmi le ruthénium, l'osmium, le strontium, l'étain, le tantale, le niobium, l'antimoine, le nickel, le calcium, le baryum, le cuivre, le cobalt, le platine, le titane, l'indium, le molybdène, le tungstène, l'or, le manganèse et le chrome, de préférence choisi parmi le ruthénium, le strontium, le cobalt, le molybdène, le titane et le manganèse, et de préférence encore choisi parmi le ruthénium, le cobalt et le molybdène.

Le métal M peut représenter au plus 70% en mole environ, de préférence au plus 50% en mole environ, et de préférence encore au plus 40% en mole environ, par rapport au nombre total de moles d'iridium et de métal M dans le matériau de l'invention.

Le métal M peut représenter au moins 0,1% en mole environ, de préférence au moins 1% en mole environ, et de préférence encore au moins 5% en mole environ, par rapport au nombre total de moles d'iridium et de métal M dans le matériau de l'invention.

Selon une forme de réalisation particulièrement préférée de l'invention, le métal M peut représenter de 5 à 40% en mole environ, et de préférence encore de 8 à 30% en mole environ, par rapport au nombre total de moles d'iridium et de métal M dans le matériau de l'invention.

Le ruthénium est particulièrement préféré, notamment lorsqu'il est utilisé dans un rapport molaire nombres de mole de Ru/nombre de moles d'Ir variant de 0,0101 à 2 environ, et de préférence variant de 0,05 à 0,7 environ. Cela permet d'obtenir un matériau stable tout en garantissant de bonnes performances électrochimiques.

Le matériau de l'invention est de préférence essentiellement constitué d'iridium et/ou d'oxyde d'iridium, et d'un métal M et/ou d'un oxyde de métal M s'ils existent.

Dans l'invention, l'expression « essentiellement constitué » signifie que le matériau comprend au moins 90% en masse environ, de préférence au moins 95% en masse environ, et de préférence encore au moins 98% en masse environ, d'iridium et/ou d'oxyde d'iridium, et d'un métal M et/ou d'un oxyde de métal M s'ils existent, par rapport à la masse totale dudit matériau.

L'invention a pour deuxième objet un procédé de préparation d'un matériau conforme au premier objet de l'invention, caractérisé en ce qu'il comprend au moins les étapes suivantes :
i) la préparation d'une solution ou d'une suspension aqueuse comprenant au moins un précurseur d'iridium et au moins un agent porogène choisi parmi les polymères et copolymères organiques et un de leurs mélanges,
ii) l'atomisation de la solution ou de la suspension aqueuse obtenue à l'étape i), pour former des billes composites solides comprenant de l'iridium et l'agent porogène et/ou le matériau conforme au premier objet de l'invention, et
iii) la calcination des billes composites solides obtenues à l'étape ii) précédente si elles existent.

Le procédé de l'invention est simple, facilement industrialisable économique, respectueux de l'environnement, et il permet en peu d'étapes de conduire à un matériau présentant des performances catalytiques améliorées ou pour le moins similaires par rapport à celles des matériaux de l'état de l'art, notamment en termes de stabilité et d'activité.

Par ailleurs, il ne nécessite pas d'étape(s) de filtration et/ou de purification particulière(s) et ne relargue pas de déchets toxiques.

De plus, le procédé permet de contrôler la porosité du matériau obtenu, la taille des sphères et les proportions respectives d'iridium métallique et d'oxyde d'iridium dans ledit matériau. Enfin, la taille des sphères étant micrométrique ou sub-micrométrique, les problèmes en termes de toxicité et de recyclage liés à l'utilisation de nanoparticules sont éliminés.

Le solvant (aqueux) de la solution ou de la suspension aqueuse est de préférence de l'eau.

Lors de l'étape i), le précurseur d'iridium est de préférence dissous dans un solvant aqueux tel que de l'eau, puis l'agent porogène est ajouté.

Selon une forme de réalisation préférée de l'invention, le rapport molaire nombre de moles de solvant aqueux/nombre de moles de précurseur d'iridium est compris entre 20 et 10000 (bornes comprises).

Selon une forme de réalisation préférée de l'invention, le rapport molaire nombre de moles de solvant aqueux/nombre de moles de précurseur de métal M est compris entre 20 et 10000 (bornes comprises).

Le rapport molaire nombre de moles d'unités monomères de l'agent porogène/nombre de moles d'iridium dans ladite solution ou suspension aqueuse varie de préférence de 0,0005 à 7 environ, et de préférence de 0,001 à 5.

L'agent porogène a de préférence une masse molaire comprise entre 800^{∗}10⁶ et 500^{∗}10⁷ g/mol (bornes comprises).

L'agent porogène peut être choisi parmi les homopolymères et les copolymères d'acrylates, de méthacrylates, d'oxyde d'éthylène, d'oxyde de méthylène, d'oxyde de propylène, d'épichlorhydrine, d'allylglycidyléther, de styrène, de butadiène et un de leurs mélanges.

Selon une forme de réalisation préférée de l'invention, l'agent porogène est un polyméthacrylate de méthyle, un copolymère bloc d'oxyde d'éthylène et d'oxyde de propylène ou un de leurs mélanges, et de manière préférentielle un polyméthacrylate de méthyle.

À titre de copolymères blocs d'oxyde d'éthylène et d'oxyde de propylène, on peut citer celui commercialisé sous la référence Pluronic^{®} F-127.

Le rapport molaire nombre de moles d'unités monomères de l'agent porogène/nombre de moles d'iridium dans ladite solution ou suspension aqueuse varie de préférence de 0,11 à 3 lorsque l'agent porogène utilisé est le polyméthacrylate de méthyle.

Le rapport molaire nombre de moles d'unités monomères de l'agent porogène/nombre de moles d'iridium dans ladite solution ou suspension aqueuse varie de préférence de 0,001 à 3, et de préférence encore de 0,005 à 3 lorsque l'agent porogène utilisé est le Pluronic^{®} F-127.

Un polyméthacrylate de méthyle est particulièrement préféré. En effet, il permet d'obtenir un matériau plus stable présentant une résistance mécanique améliorée, notamment lorsqu'il est utilisé dans un électrolyseur à titre de catalyseur, en particulier lorsque des densités de courant élevées (i.e. supérieures à 1 A.cm⁻²) sont mises en oeuvre. Il peut permettre également d'obtenir un matériau assurant une meilleure gestion des gaz produits lors de l'électrolyse.

L'agent porogène peut être soluble (i.e. formation d'une solution aqueuse) ou non soluble (i.e. formation d'une suspension aqueuse) dans l'eau.

À titre d'exemples d'agents porogènes solubles dans l'eau, on peut citer les copolymères bloc d'oxyde d'éthylène et d'oxyde de propylène ou les polybutadiènes.

À titre d'exemples d'agents porogènes insolubles dans l'eau, on peut citer les polyméthacrylates de méthyle ou les polystyrènes.

Les agents porogènes insolubles dans l'eau sont particulièrement préférés.

Lorsque l'agent porogène est insoluble dans l'eau, il peut présenter une taille moyenne de particules (notamment sphériques) variant de 51 à 1000 nm environ, et de préférence de 100 à 600 nm environ.

Le type d'agent porogène utilisé a une influence sur la morphologie et la porosité des sphères obtenues à l'issue de l'étape iii). En particulier, le type d'agent porogène a une influence sur le type de surface ou paroi externe obtenue.

Un agent porogène soluble dans l'eau conduit de préférence à des sphères creuses macroporeuses à paroi externe dense (porosité centrale et fermée).

Un agent porogène insoluble dans l'eau conduit de préférence à des sphères pleines macroporeuses à paroi externe macroporeuse, éventuellement en mélange avec des sphères creuses macroporeuses (et éventuellement mésoporeuses) à paroi externe macroporeuse (et éventuellement mésoporeuse) (porosité centrale et surfacique ouverte).

Une combinaison d'un agent porogène soluble dans l'eau et d'un agent porogène insoluble dans l'eau conduit de préférence à des sphères creuses macroporeuses à doubles parois interne et externe macroporeuses (porosités surfacique ouverte, et centrale fermée), éventuellement en mélange avec des sphères pleines macroporeuses à paroi externe macroporeuse, et éventuellement en mélange avec des sphères creuses macroporeuses (et éventuellement mésoporeuses) à paroi externe macroporeuse (et éventuellement mésoporeuse) (porosité centrale et surfacique ouverte).

Lorsque l'agent porogène est insoluble dans l'eau, et notamment sous la forme de particules dispersées dans l'eau (formation d'une suspension aqueuse lors de l'étape i)), la taille desdites particules a une influence sur la taille des macropores formées lors de l'étape iii) de calcination.

Le précurseur d'iridium peut être choisi parmi les chlorures, les nitrates, les acétates, les alcoxydes, les bromures et les acétylacétonates d'iridium.

Les chlorures sont préférés, notamment le chlorure de formule IrCl₃.xH₂O, x étant tel que 0 ≤ x ≤ 5 ou le chlorure de formule IrCl₄.xH₂O, x étant tel que 0 ≤ x ≤ 5.

Lorsque le matériau comprend un métal M et/ou un oxyde de métal M tels que définis dans le premier objet de l'invention, la solution ou la suspension aqueuse comprend en outre au moins un précurseur de métal M, et de préférence au moins un précurseur de ruthénium tel que le chlorure de ruthénium de formule RuCl₃.xH₂O, x étant tel que 0 ≤ x ≤ 3, ou un précurseur de cobalt tel que le chlorure de cobalt de formule CoCl₂.6H₂O, ou un précurseur de molybdène tel que le chlorure de molybdène de formule MoCl₅.

Selon une forme de réalisation préférée de l'invention, l'étape i) peut être effectuée :
- en préparant une solution aqueuse A comprenant le précurseur d'iridium (et le précurseur de métal M s'il existe) ;
- en préparant une solution ou une suspension aqueuse B comprenant l'agent porogène ; et
- en mélangeant la solution aqueuse A avec la solution ou suspension aqueuse B.

L'étape i) est généralement effectuée à température ambiante (i.e. 20-25°C environ).

Au cours de l'étape ii), la transformation chimique du précurseur d'iridium en iridium et/ou en oxyde d'iridium (et la transformation chimique du précurseur de métal M en métal M et/ou en oxyde de métal M si le précurseur de métal M existe) a lieu, notamment par condensation de type « sol-gel ».

Au cours de l'étape ii), la température peut varier de 35°C à 1000°C environ, de préférence de 50°C à 800°C environ, et de préférence encore de 65°C à 375°C environ.

Lors de l'étape ii), on obtient soit des billes composites solides comprenant de l'iridium et l'agent porogène, soit le matériau conforme à l'invention, soit un mélange des billes composites solides et du matériau conforme à l'invention.

En d'autres termes, l'atomisation de l'étape ii) permet de former des billes composites solides comprenant de l'iridium et l'agent porogène, qui peuvent être transformées à leur tour au moins en partie, voire complètement, en matériau conforme à l'invention au cours de cette même étape ii).

La transformation des billes composites solides en matériau conforme à l'invention se produit notamment lorsque les conditions opératoires de l'étape ii) (e.g. température) permettent d'éliminer complètement ou partiellement l'agent porogène desdites billes.

Dans l'invention, l'expression « atomisation » bien connu sous l'anglicisme « *spray-drying* » est une méthode de déshydratation d'un liquide sous forme de poudre par passage dans un flux d'air chaud.

L'atomisation permet de contrôler la taille et la structure des billes composites solides formées au cours de l'étape ii), et ainsi de former des sphères (i.e. le matériau conforme à l'invention) directement à l'issue de l'étape ii) et/ou à l'issue de l'étape iii) ultérieure.

En d'autres termes, une simple étape d'évaporation à l'air ou en présence de tout autre gaz de l'eau ou du solvant d'une solution ou d'une suspension ne peut pas permettre de former les billes composites solides et par la suite, des sphères telles que définies dans le premier objet de l'invention.

Selon une première variante de l'invention, l'étape ii) conduit aux billes composites solides, éventuellement en mélange avec le matériau conforme à l'invention. L'étape ii) est par conséquent suivie de l'étape iii) ultérieure de calcination desdites billes.

Selon une deuxième variante, l'étape ii) conduit au matériau de l'invention. L'étape iii) ultérieure de calcination n'est donc par conséquent pas nécessaire.

L'étape ii) d'atomisation peut comprendre les sous-étapes suivantes :
ii-1) la pulvérisation de la solution ou de la suspension aqueuse obtenue à l'étape i), pour former des gouttelettes de ladite solution ou suspension aqueuse,
ii-2) le séchage des gouttelettes en présence d'un flux d'un gaz chaud, pour former des billes composites solides comprenant de l'iridium et l'agent porogène, et
ii-3) la collecte des billes composites solides et/ou du matériau conforme à l'invention.

L'étape ii) peut être effectuée à l'aide d'un atomiseur, éventuellement couplé à un four.

Lorsque l'étape ii) est mise en oeuvre avec un atomiseur couplé à un four, l'étape ii) peut permettre la transformation des billes composites solides en matériau conforme à l'invention, et la température peut varier alors de 35°C à 1000°C environ, de préférence de 50°C à 800°C environ.

Lorsque l'étape ii) est mise en oeuvre avec un atomiseur seul, cette transformation peut ne pas se produire ou de façon réduite, et la température varie de préférence de 65°C à 375°C environ.

La taille des billes composites obtenues à l'issue de l'étape ii) peut être modulée selon la proportion de matières non-volatiles (i.e. précurseur d'iridium et agent porogène) dans la solution ou suspension aqueuse pulvérisée lors de l'étape i).

La pulvérisation peut être effectuée au moyen de buses sous pression, de buses monofluide, bifluide, trifluide, de turbines centrifuges ou d'ultrasons.

L'étape de séchage ii-2) comprend le séchage « proprement dit » des gouttelettes, et également la transformation chimique du précurseur d'iridium en iridium et/ou en oxyde d'iridium (et la transformation chimique du précurseur de métal M en métal M et/ou en oxyde de métal M si le précurseur de métal M existe), notamment par condensation de type « sol-gel ».

Au cours de l'étape ii-2), la température peut varier de 35°C à 1000°C environ, de préférence de 50°C à 800°C environ, et de préférence encore de 65°C à 375°C environ.

Cette température correspond généralement à la température du gaz chaud lors de la mise en contact dudit gaz chaud avec les gouttelettes issues de l'étape ii-1).

Lorsqu'un atomiseur est utilisé lors de l'étape ii) [et donc des étapes ii-1), ii-2) et ii-3)], la température d'entrée de l'atomiseur (étape ii-2)) peut varier de 35°C à 1000°C environ, de préférence de 50°C à 800°C environ, et de préférence encore de 65°C à 375°C environ.

La température de sortie de l'atomiseur (i.e. de la zone de collecte, étape ii-3)) peut varier de 20°C à350°C environ, et de préférence de 80°C à 150°C environ.

Le gaz chaud utilisé est de préférence de l'azote ou de l'air chaud.

L'étape de calcination iii) est effectuée afin d'éliminer la totalité de l'agent porogène des billes composites solides.

L'étape iii) de calcination peut également être effectuée afin de compléter la densification du matériau conforme à l'invention de l'étape ii) et/ou de cristalliser partiellement ou totalement le matériau conforme à l'invention de l'étape ii).

L'étape de calcination est de préférence effectuée à une température d'au moins 300°C environ, et de préférence encore d'au moins 350°C environ.

L'étape de calcination est de préférence effectuée à une température d'au plus 850°C environ, de préférence encore d'au plus 600°C environ, et de préférence encore d'au plus 550°C environ. Cela permet ainsi d'éviter la cristallisation complète de l'iridium et/ou de l'oxyde d'iridium, et ainsi d'améliorer les performances électrochimiques du matériau de l'invention.

Selon une forme de réalisation particulièrement préférée de l'invention, l'étape de calcination est effectuée à une température variant de 375 à 550°C environ, de préférence de 390 à 475°C environ, et de préférence encore de 400 à 450°C environ.

Lorsque le matériau comprend uniquement de l'iridium à titre de métal, l'étape de calcination est effectuée à une température variant de 375 à 550°C environ, de préférence de 390 à 475°C environ, et de préférence encore de 400 à 450°C environ.

Lorsque le matériau comprend de l'iridium à titre de métal et un ou plusieurs autres métaux M tels que cités ci-avant, l'étape de calcination est effectuée à une température variant de 375 à 850°C environ, et de préférence de 400 à 850°C environ.

L'étape iii) peut être effectuée sous atmosphère oxydante (e.g. sous air ou sous dioxygène) ou sous atmosphère inerte (e.g. sous diazote ou sous argon) ou sous atmosphère réductrice (e.g. sous dihydrogène).

L'atmosphère utilisée contrôle la diffusion d'oxygène lors de l'étape iii), et ainsi favorise soit la formation d'oxyde d'iridium, soit celle d'iridium métallique.

En particulier, une atmosphère oxydante est avantageuse pour conduire majoritairement à de l'oxyde d'iridium et une atmosphère inerte est avantageuse pour conduire majoritairement à de l'iridium métallique.

La durée, la vitesse et la température maximale de calcination ont également une influence sur la diffusion d'oxygène.

En particulier, une durée longue de calcination et/ou une vitesse lente de chauffage au cours de la calcination et/ou une température maximale de chauffage plus élevée est avantageuse pour favoriser la formation d'oxyde d'iridium ; et une durée courte de calcination et/ou une vitesse rapide de chauffage au cours de la calcination et/ou une température maximale de chauffage moins élevée est avantageuse pour favoriser la formation d'iridium métallique.

La durée de l'étape iii) varie généralement de 15 minutes à 5h environ, et de préférence de 20 minutes à 4h environ.

Selon une première variante, l'étape iii) peut être réalisée selon les sous-étapes suivantes :
- le chauffage d'une température T_{c1} variant de 15 à 30°C environ à une température T_{c2} variant de 375 à 550°C environ, de préférence de 390 à 475°C environ, et de préférence encore de 400 à 450°C environ, pendant 5 à 30 min, puis,
- le chauffage à la température T_{c2} pendant 5 à 30 min.

Selon une deuxième variante, l'étape iii) peut être réalisée selon les sous-étapes suivantes :
- le chauffage d'une température T_{c1} variant de 15 à 30°C environ à une température T_{c2} variant de 375 à 550°C environ, de préférence de 390 à 475°C environ, et de préférence encore de 400 à 450°C environ, pendant 2h à 4h30, puis,
- le chauffage à la température T_{c2} pendant 5 à 30 min.

Il convient de noter que lorsqu'un agent porogène soluble dans l'eau (respectivement un copolymère bloc d'oxyde d'éthylène et d'oxyde de propylène) est utilisé, la seconde variante est particulièrement appropriée.

Il convient de noter que lorsqu'un agent porogène insoluble dans l'eau éventuellement en mélange avec un agent porogène soluble dans l'eau (respectivement un polyméthacrylate éventuellement en mélange avec un copolymère bloc d'oxyde d'éthylène et d'oxyde de propylène) est utilisé, la première et la seconde variantes peuvent être utilisées.

Le procédé peut comprendre en outre une étape iv) de préparation d'une encre comprenant le matériau de l'invention, un solvant aqueux et/ou organique, éventuellement un agent conférant une conductivité électronique et éventuellement un liant polymère.

Le solvant aqueux peut être de l'eau.

L'agent conférant une conductivité électronique peut être choisi parmi le noir de carbone, le carbone SP, le noir d'acétylène, les fibres et nanofibres de carbone (e.g.fibres de carbone à croissance en phase vapeur VGCF-S pour « *vapor ground carbon fibers* » en anglais), les nanotubes de carbone, le graphène oxydé-réduit, le graphène oxydé, le graphite, les particules et fibres métalliques et l'un de leurs mélanges.

Le noir de carbone est préféré.

Le liant polymère peut être n'importe quel liant polymère conventionnellement utilisé dans un électrolyseur à eau, tel qu'un copolymère de tétrafluoroéthylène et d'acide perfluorosulfonique (e.g. Nafion^{®}).

Cette étape iv) peut être suivie d'une étape v) de dépôt de l'encre sur un support pour conduire à au moins une couche catalytique.

Grâce à la structure hiérarchique et la porosité organisée du matériau de l'invention, la couche catalytique obtenue est une couche poreuse.

Le support peut être une électrode (e.g. anode) ou un support temporaire tel qu'un film mince de polymère comme le Téflon^{®} (PTFE) ou le Kapton^{®}.

Dans la couche catalytique, les sphères sont en contact afin d'assurer la conduction électronique.

L'étape v) de dépôt peut être effectuée selon des méthodes bien connues de l'homme du métier, en particulier par pulvérisation, enduction ou impression jet d'encre.

L'étape v) peut être suivie d'une étape vi) de transfert de la couche catalytique, notamment par la méthode bien connue sous l'anglicisme « decaltranfer ».

Cette technique consiste généralement à élaborer la couche catalytique sur un support temporaire (étape v)) puis à la transférer sur une membrane d'un électrolyseur (étape vi)).

L'étape vi) peut être effectuée par pressage à chaud.

Le matériau susceptible d'être obtenu selon le procédé conforme au deuxième objet de l'invention peut être tel que défini dans le premier objet de l'invention.

L'invention a pour troisième objet l'utilisation d'un matériau conforme au premier objet de l'invention ou obtenu selon un procédé conforme au deuxième objet de l'invention, comme catalyseur, et notamment catalyseur anodique dans un électrolyseur à eau PEM.

L'invention a pour quatrième objet l'utilisation d'un matériau conforme au premier objet de l'invention ou obtenu selon un procédé conforme au deuxième objet de l'invention, pour la fabrication de diodes électroluminescentes (LEDs) pour divers appareils électroniques tels que les smartphones, les tablettes ou les téléviseurs, ou pour les automobiles.

En effet, le matériau conforme au premier objet de l'invention ou obtenu selon un procédé conforme au deuxième objet de l'invention peut être mis sous la forme d'un creuset à base d'iridium utilisable pour fabriquer des diodes électroluminescentes.

L'invention a pour cinquième objet un électrolyseur à eau PEM comprenant à l'anode un matériau conforme au premier objet de l'invention ou obtenu selon un procédé conforme au deuxième objet de l'invention.

L'anode peut en particulier comprendre une quantité surfacique de matériau d'au plus 3 mg/cm² environ, et de préférence une quantité d'au plus 2 mg/cm² environ.

### EXEMPLES

### Caractérisations des matériaux

La surface spécifique des matériaux a été mesurée par adsorption-désorption d'azote et la méthode B.E.T, en utilisant un appareil vendu sous la dénomination commerciale Belsorp-max par la société MicrotracBEL.

Les matériaux ont été analysés par microscopie électronique à balayage (MEB) à l'aide d'un appareil vendu sous la dénomination commerciale ZEISS supra 40 par la société ZEISS mettant en oeuvre un canon à effet de champ.

Les matériaux ont également été analysés par diffraction aux rayons X à l'aide d'un diffractomètre vendu sous la dénomination commerciale Panalytical X'pert pro par la société Panalytical et équipé d'une anode de cobalt et d'un détecteur X'celerator.

Les matériaux ont été testés par voltamétrie cyclique à l'aide d'un potentiostat vendu sous la dénomination commerciale Autolab PGSTAT 12 par la société Metrohm (tests ex-situ). L'électrode de travail était une électrode de carbone vitreux à disque tournant de 5 mm de diamètre (Pine Instrument), polie doucement et rincée dans l'éthanol en présence d'ultrasons avant utilisation. La contre-électrode était un fil de platine et l'électrode de référence une électrode au calomel aqueux. Toutes les expériences ont été mises en oeuvre sous argon à 20°C à une vitesse de rotation de 1600 tours/minute. Une solution d'acide sulfurique à 0,05 mol/l a été préparée et utilisée comme électrolyte. Pour fabriquer l'électrode, une encre d'électrode comprenant 1 mg de matériau à base d'iridium et/ou d'oxyde d'iridium, 2 mg de noir de carbone commercialisé sous la référence Vulcan XC72R par Cabot, 250 µL d'une solution de Nafion^{®} à 5% en masse commercialisée par Alfa Aesar et 250µL d'eau déionisée (conductivité de 0,059 µS.cm⁻²) a été préparée. 8,8 µL de cette encre d'électrode ont été déposés sur la surface de l'électrode de travail pour former une couche catalytique, puis l'ensemble a été séché à l'air et laissé 30 min à 100°C dans un four.

Les matériaux ont également été caractérisés à l'aide d'un banc de test électrolyse. Les couches catalytiques ont été préparées par la technique de décal-transfer. Le matériau conforme à l'invention et une solution d'ionomère perfluorosulfoné (commercialisé sous la référence Nafion^{®}) sous la forme d'une dispersion à 5% en masse, ont été mélangés dans un solution eau/isopropanol (rapport volumique 1/3) pour obtenir un rapport massique final : masse matériau conforme à l'invention/masse (matériau conforme à l'invention + ionomère) compris entre 10 et 50% environ, et de préférence entre 20 et 30% environ. La solution résultante a été ensuite déposée sur une feuille en téflon^{®} par spray. Après préparation des couches catalytiques, une étape de pressage à chaud a été effectuée à 135°C, à une pression de 160 kg/cm² pendant 90 secondes pour transférer les couches catalytiques sur une membrane perfluorosulfonée (commercialisée sous la référence Nafion^{®} 115). La membrane et l'anode ont ensuite à nouveau été pressées à 135°C, à une pression de 160 kg/cm² pendant 5 minutes avec une électrode-couche de diffusion constituant la couche catalytique cathodique, comprenant un papier de carbone sur lequel est déposé 0,5 mg/cm² de platine. Les assemblages membrane-électrodes préparés ont été insérés dans une monocellule de 6,25 cm² possédant des plaques monopolaires en titane recouverte d'or à l'anode.

### Exemple 1 : procédé de préparation de matériaux conformes à l'invention M₁ et M'₁

Une solution aqueuse A comprenant 1 g d'IrCl₃.xH₂O dans 27 ml d'eau a été préparée.

Une suspension aqueuse B comprenant 0,33 g de polyméthacrylate de méthyle sous la forme de billes de 300 nm de diamètre dans 3 ml d'eau a été préparée.

Les billes de polyméthacrylate de méthyle ont été préalablement préparées par polymérisation radicalaire en émulsion de méthacrylate de méthyle selon le procédé décrit dans Hatton et al., PNAS, 2010,107, 23, 10354.

28 g de solution A ont été mélangés avec 3,33 g de suspension B pour former une suspension aqueuse comprenant 3,2% en masse d'IrCl₃.xH₂O et 1% en masse de polyméthacrylate de méthyle, par rapport à la masse totale de la suspension aqueuse.

Cette suspension aqueuse a été pulvérisée à l'aide d'un atomiseur vendu sous la dénomination commerciale B290 par la société Buchi.

Les gouttelettes formées ont été séchées sous flux d'air chaud. La température d'entrée de l'atomiseur était de 220°C environ et sa température de sortie était de 145°C environ.

Les billes composites obtenues ont ensuite été calcinées selon les sous-étapes suivantes :
- le chauffage des billes composites à l'air en utilisant une rampe de chauffage allant de 20°C à 450°C pendant 10 min, puis
- leur chauffage à l'air à 450°C pendant 15 minutes.

La figure 1 montre des images MEB du matériau **M₁** obtenu dans l'exemple aux échelles 1 µm (figure 1a) et 100 nm (figure 1b).

La figure 2 montre un diffractogramme de rayons X du matériau **M₁** obtenu dans l'exemple 1.

Dans cet exemple, le matériau **M₁** était essentiellement constitué d'iridium métallique, il se présentait sous la forme de sphères pleines microniques et sub-microniques macroporeuses et mésoporeuses à paroi externe macroporeuse et mésoporeuse, en mélange avec des sphères creuses macroporeuses et mésoporeuses à paroi externe macroporeuse et mésoporeuse. Le matériau **M₁** avait une surface spécifique de 37 m²/g. Les sphères présentaient un diamètre moyen de 1,164 µm. Les macropores présentaient une taille moyenne de 260 nm environ. Le matériau **M₁** comprenait un mélange de phases amorphe et cristalline.

Lorsque la calcination telle que décrite ci-dessus a été effectuée à 550°C à la place de 450°C, dans les mêmes conditions que ci-dessus (rampe de 20 à 550°C en 10 min à l'air, puis 550°C pendant 15 min à l'air),le matériau obtenu **M'₁** était essentiellement constitué d'iridium métallique et d'oxyde d'iridium avec un rapport molaire iridium métallique/oxyde d'iridium de 80/20 environ. Le matériau **M'₁** comprenait un mélange de phases amorphe et cristalline. Il se présentait sous la forme de sphères pleines microniques et sub-microniques macroporeuses et mésoporeuses à paroi externe macroporeuse et mésoporeuse, en mélange avec des sphères creuses macroporeuses et mésoporeuses à paroi externe macroporeuse et mésoporeuse. Les sphères présentaient un diamètre moyen de 1,164 µm. Les macropores présentaient une taille moyenne de 260 nm environ.

### Exemple 2 : procédé de préparation de matériaux conformes à l'invention M₂ et M'₂

Une solution aqueuse A comprenant 1 g d'IrCl₃.xH₂O dans 27 ml d'eau a été préparée.

Une solution aqueuse B comprenant 0,33 g de polyméthacrylate de méthyle sous la forme de billes de 300 nm de diamètre tel que préparé selon le procédé décrit dans l'exemple 1, dans 3 ml d'eau a été préparée.

28 g de solution A ont été mélangés avec 3,33 g de suspension B pour former une suspension aqueuse comprenant 3,2% en masse d'IrCl₃.xH₂O et 1% en masse de polyméthacrylate de méthyle, par rapport à la masse totale de la suspension aqueuse.

Cette suspension aqueuse a été pulvérisée à l'aide d'un atomiseur tel que décrit dans l'exemple 1 et en utilisant les mêmes paramètres de pulvérisation et d'atomisation.

Les gouttelettes formées ont été séchées sous flux d'air chaud.

Les billes composites obtenues ont ensuite été calcinées selon les sous-étapes suivantes :
- le chauffage des billes composites à l'air en utilisant une rampe de chauffage allant de 20°C à 450°C pendant 3h30, puis
- leur chauffage à l'air à 450°C pendant 10 minutes.

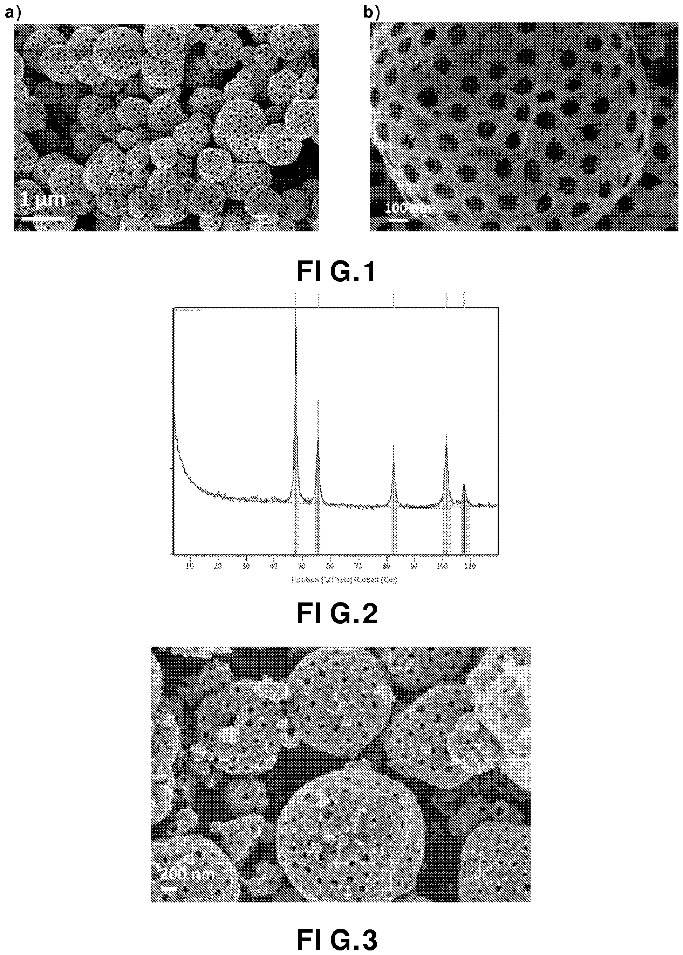

La figure 3 montre une image MEB du matériau **M₂** obtenu dans l'exemple 2 à l'échelle 200 nm.

Le matériau **M₂** obtenu dans l'exemple 2 comprenait 20% en mole d'iridium métallique et 80% en mole d'oxyde d'iridium. Le matériau **M₂** comprenait un mélange de phases amorphe et cristalline.

Dans cet exemple, le matériau **M₂** se présentait sous la forme de sphères pleines microniques et sub-microniques macroporeuses et mésoporeuses à paroi externe macroporeuse et mésoporeuse, en mélange avec des sphères creuses macroporeuses et mésoporeuses à paroi externe macroporeuse et mésoporeuse. De petits cristallites étaient présents à la surface des sphères pleines et notamment de la paroi externe. Les macropores présentaient une taille moyenne (en nombre) de 250 nm environ. Le matériau **M₂** avait une surface spécifique de 68 m²/g environ. Les sphères présentaient un diamètre moyen (en nombre) de 1,029 µm environ.

Lorsque la calcination telle que décrite ci-dessus a été effectuée selon les sous-étapes suivantes :
- le chauffage des billes composites à l'air en utilisant une rampe de chauffage allant de 20°C à 450°C pendant 10 min, puis
- leur chauffage à l'air à 450°C pendant 3h35 minutes,

Le matériau obtenu **M'₂** était essentiellement constitué d'iridium métallique et d'oxyde d'iridium avec un rapport molaire iridium métallique/oxyde d'iridium de 60/40 environ. Le matériau **M'₂** comprenait un mélange de phases amorphe et cristalline. Il se présentait sous la forme de sphères pleines microniques et sub-microniques macroporeuses et mésoporeuses à paroi externe macroporeuse et mésoporeuse, en mélange avec des sphères creuses macroporeuses et mésoporeuses à paroi externe macroporeuse et mésoporeuse. Les sphères présentaient un diamètre moyen de 1,029 µm. Les macropores présentaient une taille moyenne de 250 nm environ.

### Exemple 3 : procédé de préparation d'un matériau conforme à l'invention M₃

Une solution aqueuse A comprenant 1 g d'IrCl₃.xH₂O dans 27 ml d'eau a été préparée.

Une solution aqueuse B comprenant 0,33 g d'un copolymère bloc d'oxyde d'éthylène et d'oxyde de propylène commercialisé sous la référence Pluronic^{®} F-127 dans 3 ml d'eau a été préparée.

28 g de solution A ont été mélangés avec 3 ml de solution B pour former une solution aqueuse comprenant 3,2% en masse d'IrCl₃.xH₂O et 1% en masse de copolymère bloc d'oxyde d'éthylène et d'oxyde de propylène, par rapport à la masse totale de la solution aqueuse.

Cette solution aqueuse a été pulvérisée à l'aide d'un atomiseur tel que décrit dans l'exemple 1 et en utilisant les mêmes paramètres de pulvérisation et d'atomisation.

Les gouttelettes formées ont été séchées sous flux d'air chaud.

Les billes composites obtenues ont ensuite été calcinées selon les sous-étapes suivantes :
- le chauffage des billes composites à l'air en utilisant une rampe de chauffage allant de 20°C à 450°C pendant 3h30, puis
- leur chauffage à l'air à 450°C pendant 10 minutes.

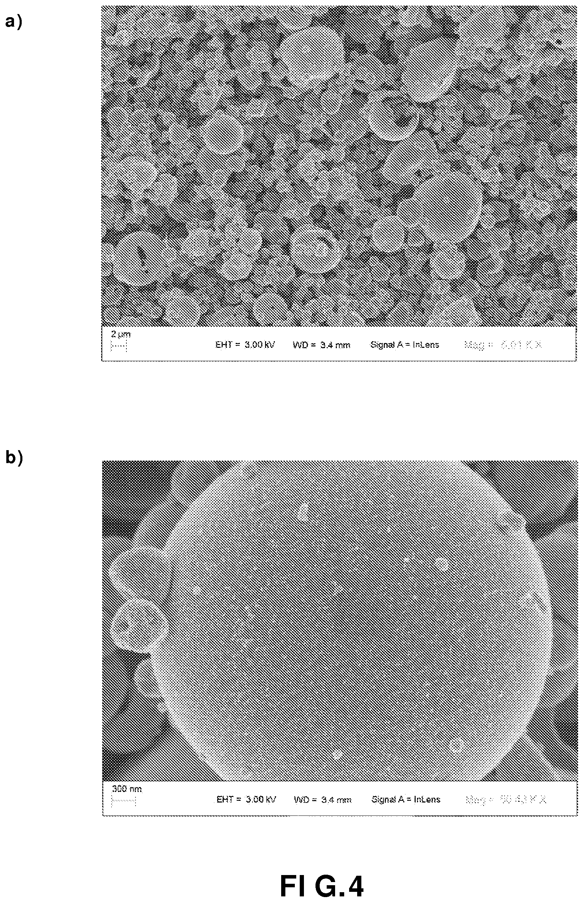

La figure 4 montre une image MEB du matériau **M₃** obtenu dans l'exemple 3 à l'échelle 2 µm (figure 4a) et à l'échelle 300 nm (figure 4b).

Dans cet exemple, le matériau **M₃** se présentait sous la forme de sphères creuses microniques et sub-microniques macroporeuses à paroi externe dense. Les sphères présentaient un diamètre moyen de 1,780 µm. Les macropores centraux présentaient une taille moyenne de 1,480 µm environ. Le matériau **M₃** comprenait très majoritairement une phase amorphe.

### Exemple 4 : procédé de préparation d'un matériau conforme à l'invention M₄

Une solution aqueuse A comprenant 1 g d'IrCl₃.xH₂O dans 27 ml d'eau a été préparée.

Une suspension aqueuse B comprenant 0,17 g d'un copolymère bloc d'oxyde d'éthylène et d'oxyde de propylène commercialisé sous la référence Pluronic^{®} F-127 et 0,17 g de polyméthacrylate de méthyle sous la forme de billes de 300 nm de diamètre tel que préparé selon le procédé décrit dans l'exemple 1, dans 3 ml d'eau a été préparée.

28 g de solution A ont été mélangés avec 3,33 g de suspension B pour former une suspension aqueuse comprenant 3,2% en masse d'IrCl₃.xH₂O, 0,5% en masse de polyméthacrylate de méthyle et 0,5% en masse de copolymère bloc d'oxyde d'éthylène et d'oxyde de propylène, par rapport à la masse totale de la suspension aqueuse.

Cette suspension aqueuse a été pulvérisée à l'aide d'un atomiseur tel que décrit dans l'exemple 1 et en utilisant les mêmes paramètres de pulvérisation et d'atomisation.

Les gouttelettes formées ont été séchées sous flux d'air chaud.

Les billes composites obtenues ont ensuite été calcinées selon les sous-étapes suivantes :
- le chauffage des billes composites à l'air en utilisant une rampe de chauffage allant de 20°C à 450°C pendant 10 min, puis
- leur chauffage à l'air à 450°C pendant 15 minutes.

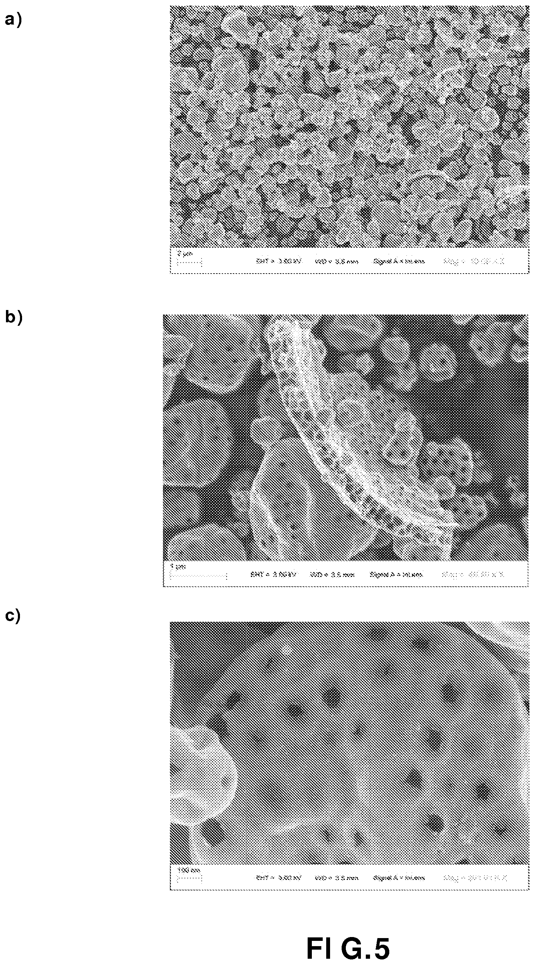

La figure 5 montre une image MEB du matériau **M₄** obtenu dans l'exemple 4 à l'échelle 2 µm (figure 5a), à l'échelle 1 µm (figure 5b) et à l'échelle 100 nm (figure 5c).

Dans cet exemple, le matériau **M₄** se présentait sous la forme de sphères creuses microniques et sub-microniques macroporeuses et mésoporeuses à doubles parois interne et externe macroporeuse et mésoporeuse. Les macropores des parois interne et externe présentaient une taille moyenne de 175 nm environ. Les macropores centraux présentaient une taille moyenne de 500 nm environ. Les sphères présentaient un diamètre moyen de 1,280 µm.

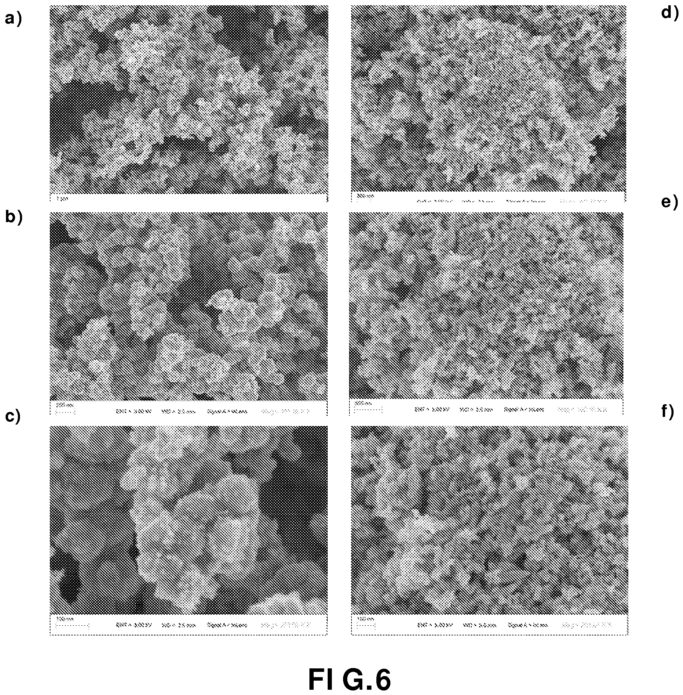

À titre comparatif, la figure 6 montre une image MEB de l'iridium métallique **M_{A}** commercialisé par Alfa-Aesar à l'échelle 1 µm (figure 6a), à l'échelle 200 nm (figure 6b) et à l'échelle 100 nm (figure 6c) et une image MEB de l'oxyde d'iridium **M_{B}** commercialisé par Alfa-Aesar à l'échelle 300 nm (figure 60d), à l'échelle 200 nm (figure 6e) et à l'échelle 250 nm (figure 6f).

Ces matériaux **M_{A}** et **M_{B}** sont principalement sous la forme de cristallites. En particulier, ils ne sont pas macroporeux et ne sont pas sous la forme de sphères microniques ou sub-microniques. Les matériaux **M_{A}** et **M_{B}** sont des matériaux sous la forme de nanoparticules.

### Exemple 5 : procédé de préparation d'un matériau conforme à l'invention M₅

Une solution aqueuse A comprenant 0,2 g d'IrCl₃.xH₂O et 0,075 g de RuCl₃.xH₂O dans 8,4 ml d'eau a été préparée.

Une suspension aqueuse B comprenant 0,11 g de polyméthacrylate de méthyle sous la forme de billes de 300 nm de diamètre tel que préparé selon le procédé décrit dans l'exemple 1, dans 0,89 ml d'eau a été préparée.

8,675 g ml de solution A ont été mélangés avec 1 g de suspension B pour former une suspension aqueuse comprenant 2,07% en masse d'IrCl₃.xH₂O, 0,78% en masse RuCl₃.xH₂O et 1,14% en masse de polyméthacrylate de méthyle, par rapport à la masse totale de la suspension aqueuse.

Cette suspension aqueuse a été pulvérisée à l'aide d'un atomiseur vendu sous la dénomination commerciale B290 par la société Buchi.

Les gouttelettes formées ont été séchées sous flux d'air chaud. La température d'entrée de l'atomiseur était de 220°C environ et sa température de sortie était de 145°C environ.

Les billes composites obtenues ont ensuite été calcinées selon les sous-étapes suivantes :
- le chauffage des billes composites à l'air en utilisant une rampe de chauffage allant de 20°C à 450°C pendant 3h30 min, puis
- leur chauffage à l'air à 450°C pendant 15 minutes.

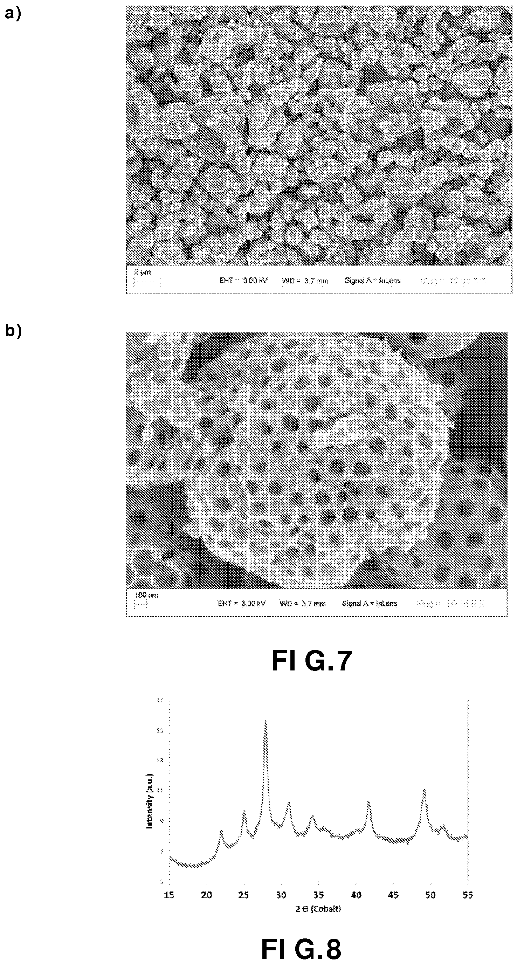

La figure 7 montre des images MEB du matériau **M₅** obtenu dans l'exemple aux échelles 2 µm (figure 7a) et 250 nm (figure 7b).

La figure 8 montre un diffractogramme de rayons X du matériau **M₅** obtenu dans l'exemple 5.

Dans cet exemple, le matériau **M₅** était essentiellement constitué d'une partie métallique et d'une partie oxyde. Il se présentait sous la forme de sphères pleines microniques et sub-microniques macroporeuses et mésoporeuses à paroi externe macroporeuse et mésoporeuse, en mélange avec des sphères creuses macroporeuses et mésoporeuses à paroi externe macroporeuse et mésoporeuse. Les sphères présentaient un diamètre moyen de 1,190 µm environ. Les macropores présentaient une taille moyenne de 250 nm environ.

### Exemple 6: caractérisations électrochimiques des matériaux conformes à l'invention

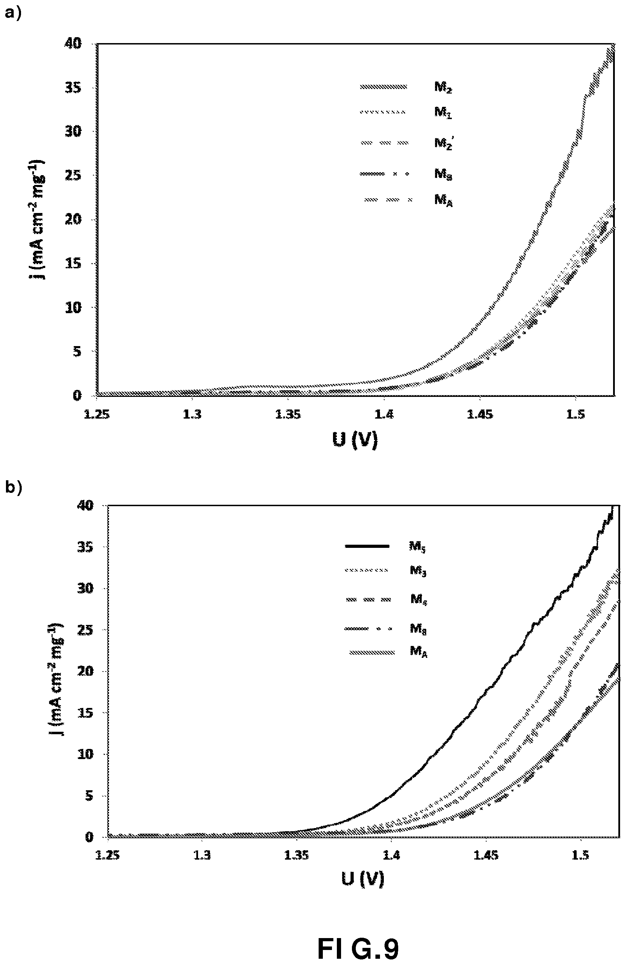

Les figure 9a et 9b montrent la courbe de la densité de courant j (en mA.cm⁻².mg⁻¹) en fonction de la tension U (en volts V) des matériaux conformes à l'invention **M₁**, **M₂**, **M'₂**, **M₃**, **M₄** et **M₅**, et à titre comparatif des matériaux commerciaux **M_{A}** et **M_{B}** non-conformes à l'invention.

Dans la figure 9a, les matériaux **M₁** et **M₂** ont des propriétés de voltamétrie cyclique comparables à celles des matériaux commerciaux. Par ailleurs, ces matériaux présentent les avantages supplémentaires d'être plus économiques, moins toxiques et plus faciles à manipuler car ils ne sont pas sous forme nanométriques comme les matériaux **M_{A}** et **M_{B}** commerciaux. En outre, ils sont obtenus à partir d'un procédé simple, ne nécessitant pas d'appareillages complexes et coûteux.

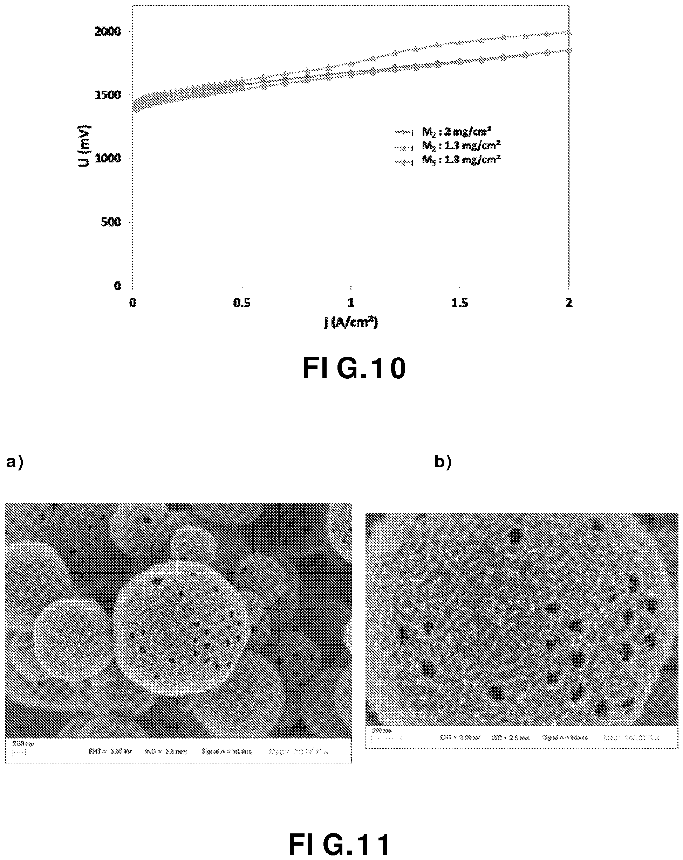

La figure 10 montre la courbe de la tension U (en millivolts, mV) en fonction du courant I (en ampère par centimètre carré, A/cm²) des matériaux conformes à l'invention **M₂** (courbe avec les losanges pleins, charge en catalyseur de 2 mg/cm²), **M₂** (courbe avec les triangles pleins, charge de 1,3 mg/cm²) et **M₅** (courbe avec les ronds pleins, charge de 1,8 mg/cm²).

### Exemple 7 : procédé de préparation d'un matériau conforme à l'invention M₆

Une solution aqueuse A comprenant 1,0 g d'IrCl₃.xH₂O et 0,102 g de CoCl₂.6H₂O dans 29,04 ml d'eau a été préparée.

Une suspension aqueuse B comprenant du polyméthacrylate de méthyle sous la forme de billes de 300 nm de diamètre tel que préparé selon le procédé décrit dans l'exemple 1, à 11% en masse a été préparée.

30142g de solution A ont été mélangés avec 3,267 g de suspension B pour former une suspension aqueuse comprenant 3% en masse d'IrCl₃.xH₂O, 0,3% en masse CoCl₂.6H₂O et 11% en masse de polyméthacrylate de méthyle, par rapport à la masse totale de la suspension aqueuse.

Cette suspension aqueuse a été pulvérisée à l'aide d'un atomiseur tel que décrit dans l'exemple 1.

Les gouttelettes formées ont été séchées sous flux d'air chaud. La température d'entrée de l'atomiseur était de 220°C environ et sa température de sortie était de 110°C environ. Les billes composites obtenues ont ensuite été calcinées selon les sous-étapes suivantes :
- le chauffage des billes composites à l'air en utilisant une rampe de chauffage allant de 20°C à 450°C pendant 3h30, puis
- leur chauffage à l'air à 450°C pendant 15 minutes.

La figure 11 montre des images MEB du matériau **M₆** obtenu dans l'exemple 7 aux échelles 2 µm (figure 11a) et 250 nm (figure 11b).

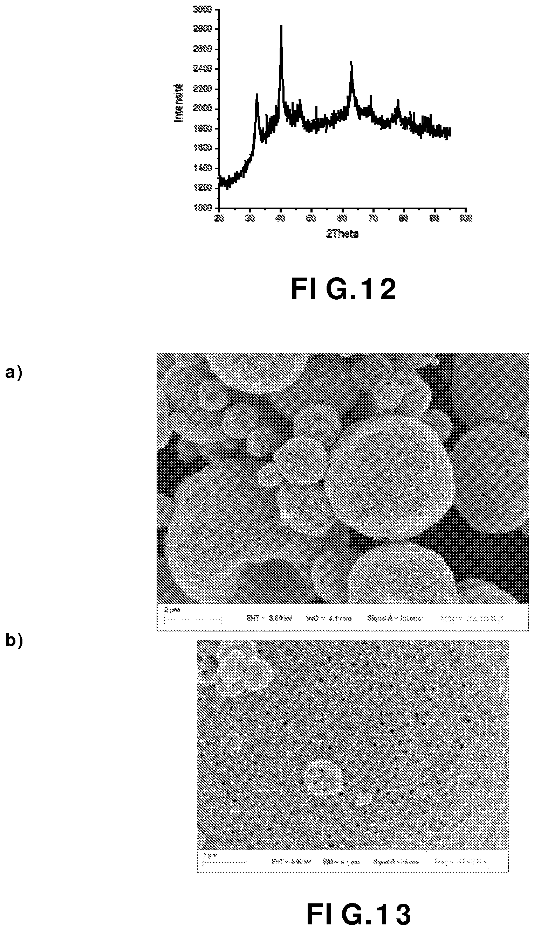

La figure 12 montre un diffractogramme de rayons X du matériau **M₆** obtenu dans l'exemple 7.

Dans cet exemple, le matériau **M₆** était essentiellement constitué d'une partie oxyde. Il comprenait 13,7% en mole de cobalt et 86,3% en mole d'iridium, par rapport au nombre total de moles de métal.

Les principaux pics sont caractéristiques de l'oxyde d'iridium, ils sont décalés vers les grands angles, ce qui signifie qu'il y a incorporation de cobalt au sein de la structure de l'oxyde d'iridium. Il se présentait sous la forme de sphères pleines microniques et sub-microniques macroporeuses et mésoporeuses à paroi externe macroporeuse et mésoporeuse, en mélange avec des sphères creuses macroporeuses et mésoporeuses à paroi externe macroporeuse et mésoporeuse. Les sphères présentaient un diamètre moyen de 2,2 µm environ. Les macropores présentaient une taille moyenne de 250 nm environ.

### Exemple 8 : procédé de préparation d'un matériau conforme à l'invention M₇

Une solution aqueuse A comprenant 1,0 g d'IrCl₃.xH₂O et 0,289 g de CoCl₂.6H₂O dans 34,85 ml d'eau a été préparée.

Une suspension aqueuse B comprenant du polyméthacrylate de méthyle sous la forme de billes de 300 nm de diamètre tel que préparé selon le procédé décrit dans l'exemple 1, à 11% en masse a été préparée.

34,85 ml de solution A ont été mélangés avec 3,935 g de suspension B pour former une suspension aqueuse comprenant 2,50% en masse d'IrCl₃.xH₂O, 0,72% en masse CoCl₂.6H₂O et 1,1% en masse de polyméthacrylate de méthyle, par rapport à la masse totale de la suspension aqueuse.

Cette suspension aqueuse a été pulvérisée à l'aide d'un atomiseur tel que décrit dans l'exemple 1.

Les gouttelettes formées ont été séchées sous flux d'air chaud. La température d'entrée de l'atomiseur était de 220°C environ et sa température de sortie était de 110°C environ. Les billes composites obtenues ont ensuite été calcinées selon les sous-étapes suivantes :
- le chauffage des billes composites à l'air en utilisant une rampe de chauffage allant de 20°C à 450°C pendant 3h30, puis
- leur chauffage à l'air à 450°C pendant 15 minutes.

La figure 13 montre des images MEB du matériau **M₇** obtenu dans l'exemple 8 aux échelles 2 µm (figure 13a) et 100 nm (figure 13a).

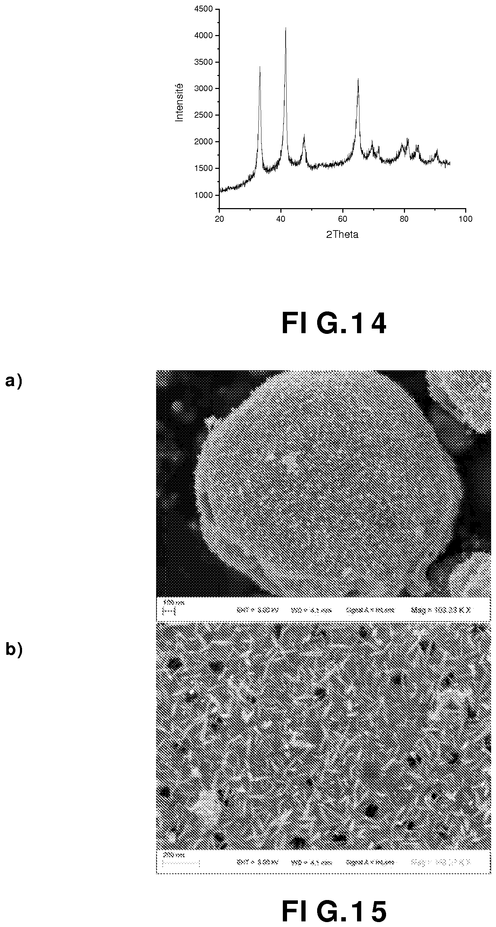

La figure 14 montre un diffractogramme de rayons X du matériau **M₇** obtenu dans l'exemple 8.

Dans cet exemple, le matériau **M₇** était essentiellement constitué d'une partie oxyde. Il comprenait 31% en mole de cobalt et 69% en mole d'iridium, par rapport au nombre total de moles de métal.

Les principaux pics sont caractéristiques de l'oxyde d'iridium, ils sont décalés vers les grands angles, ce qui signifie qu'il y a incorporation de cobalt. Il se présentait sous la forme de sphères pleines microniques et sub-microniques macroporeuses et mésoporeuses à paroi externe macroporeuse et mésoporeuse, en mélange avec des sphères creuses macroporeuses et mésoporeuses à paroi externe macroporeuse et mésoporeuse. Les sphères présentaient un diamètre compris entre 200 nm et 10 µm environ. Les macropores présentaient une taille moyenne de 250 nm environ.

### Exemple 9 : procédé de préparation d'un matériau conforme à l'invention M₈

Une solution aqueuse A comprenant 1,0 g d'IrCl₃.xH₂O et 0,086 g de MoCl₅ dans 29,335 ml d'eau a été préparée.

Une suspension aqueuse B comprenant du polyméthacrylate de méthyle sous la forme de billes de 300 nm de diamètre tel que préparé selon le procédé décrit dans l'exemple 1, à 11% en masse a été préparée.

29,335 ml de solution A ont été mélangés avec 3,265 g de suspension B pour former une suspension aqueuse comprenant 2,97% en masse d'IrCl₃.xH₂O, 0,26% en masse MoCl₅ et 1,1% en masse de polyméthacrylate de méthyle, par rapport à la masse totale de la suspension aqueuse.

Cette suspension aqueuse a été pulvérisée à l'aide d'un atomiseur tel que décrit dans l'exemple 1.

Les gouttelettes formées ont été séchées sous flux d'air chaud. La température d'entrée de l'atomiseur était de 220°C environ et sa température de sortie était de 110°C environ. Les billes composites obtenues ont ensuite été calcinées selon les sous-étapes suivantes :
- le chauffage des billes composites à l'air en utilisant une rampe de chauffage allant de 20°C à 450°C pendant 3h30, puis
- leur chauffage à l'air à 450°C pendant 15 minutes.

La figure 15 montre des images MEB du matériau **M₈** obtenu dans l'exemple 9 aux échelles 2 µm (figure 15a) et 100 nm (figure 15b).

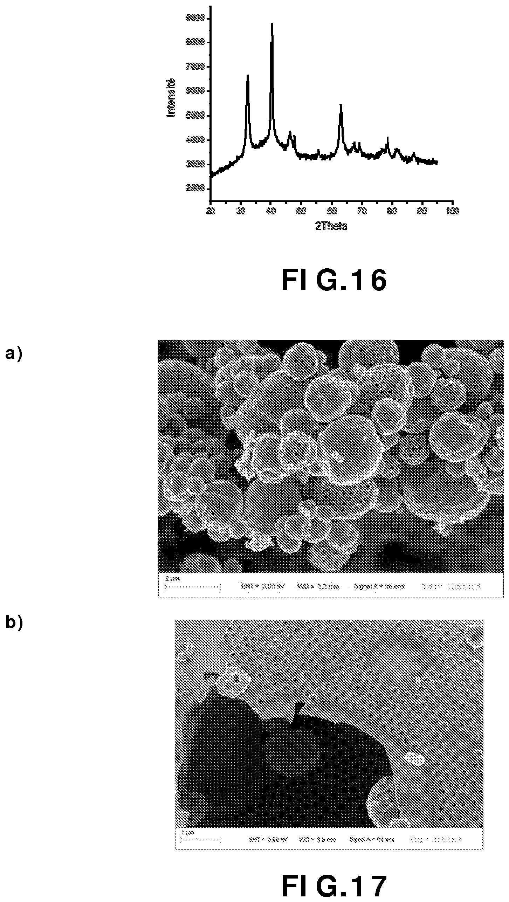

La figure 16 montre un diffractogramme de rayons X du matériau **M₈** obtenu dans l'exemple 9.

Dans cet exemple, le matériau **M₈** était essentiellement constitué d'une partie oxyde. Il comprenait 10% en mole de molybdène et 90% en mole d'iridium, par rapport au nombre total de moles de métal.

Les principaux pics sont caractéristiques de l'oxyde d'iridium, ils sont décalés vers les grands angles, ce qui signifie qu'il y a incorporation de molybdène au sein de la structure d'oxyde d'iridium. Il se présentait sous la forme de sphères pleines microniques et sub-microniques macroporeuses et mésoporeuses à paroi externe macroporeuse et mésoporeuse, en mélange avec des sphères creuses macroporeuses et mésoporeuses à paroi externe macroporeuse et mésoporeuse. Les sphères présentaient un diamètre moyen de 1,0 µm environ. Les macropores présentaient une taille moyenne de 250 nm environ.

### Exemple 10 : procédé de préparation d'un matériau conforme à l'invention M₉

Une solution aqueuse A comprenant 1,0 g d'IrCl₃.xH₂O et 0,331 g de MoCl₅ dans 35,967 ml d'eau a été préparée.

Une suspension aqueuse B comprenant du polyméthacrylate de méthyle sous la forme de billes de 300 nm de diamètre tel que préparé selon le procédé décrit dans l'exemple 1, à 11% en masse a été préparée.

35,967 ml de solution A ont été mélangés avec 4,001 g de suspension B pour former une suspension aqueuse comprenant 2,42% en masse d'IrCl₃.xH₂O, 0,80% en masse MoCl₅ et 1,4% en masse de polyméthacrylate de méthyle, par rapport à la masse totale de la suspension aqueuse.

Cette suspension aqueuse a été pulvérisée à l'aide d'un atomiseur tel que décrit dans l'exemple 1.

Les gouttelettes formées ont été séchées sous flux d'air chaud. La température d'entrée de l'atomiseur était de 220°C environ et sa température de sortie était de 110°C environ. Les billes composites obtenues ont ensuite été calcinées selon les sous-étapes suivantes :
- le chauffage des billes composites à l'air en utilisant une rampe de chauffage allant de 20°C à 450°C pendant 3h30, puis
- leur chauffage à l'air à 450°C pendant 15 minutes.

La figure 17 montre des images MEB du matériau **M₉** obtenu dans l'exemple 10 aux échelles 2 µm (figure 17a) et 100 nm (figure 17b).

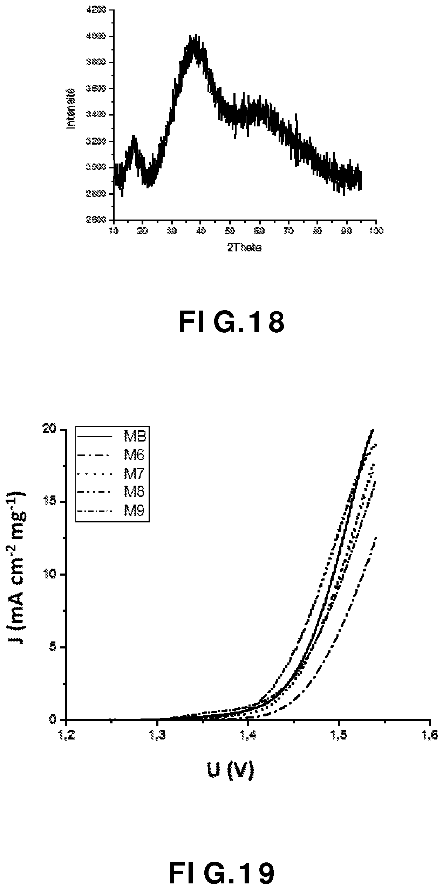

La figure 18 montre un diffractogramme de rayons X du matériau **M₉** obtenu dans l'exemple 10.

Dans cet exemple, le matériau **M₉** était essentiellement constitué d'une partie d'oxyde d'iridium amorphe. Il comprenait 30% en mole de molybdène et 70% en mole d'iridium, par rapport au nombre total de moles de métal.

Il se présentait sous la forme de sphères pleines microniques et sub-microniques macroporeuses à paroi externe macroporeuse, en mélange avec des sphères creuses macroporeuses à paroi externe macroporeuse. Les sphères présentaient un diamètre moyen de 1,0 µm environ. Les macropores présentaient une taille moyenne de 260 nm environ.

La figure 18 montre la courbe de la densité de courant j (en mA.cm⁻².mg⁻¹) en fonction de la tension U (en volts V) des matériaux conformes à l'invention **M₆**, **M₇**, **M₈**, et **M₉**, et à titre comparatif du matériau commercial **M_{B}** non-conforme à l'invention.

## Revendications

1. Matériau inorganique comprenant de l'iridium et/ou de l'oxyde d'iridium IrO₂, **caractérisé en ce qu'**il est macroporeux et qu'il se présente sous la forme de sphères microniques ou sub-microniques.

2. Matériau selon la revendication 1, **caractérisé en ce que** les sphères présentent un diamètre moyen variant de 100 nm à 40 µm.

3. Matériau selon la revendication 1 ou 2, **caractérisé en ce que** les sphères sont individuelles.

4. Matériau selon l'une quelconque des revendications précédentes, **caractérisé en ce que** les sphères ont une paroi externe d'épaisseur variant de 5 nm à 6 µm.

5. Matériau selon l'une quelconque des revendications précédentes, **caractérisé en ce qu'**il a une surface spécifique, calculée par la méthode B.E.T., variant de 20 à 200 m²/g.

6. Matériau selon l'une quelconque des revendications précédentes, **caractérisé en ce qu'**il a un volume macroporeux variant de 0,15 à 2 cm³/g.

7. Matériau selon l'une quelconque des revendications précédentes, **caractérisé en ce que** les sphères sont choisies parmi des sphères pleines macroporeuses à paroi externe macroporeuse, des sphères creuses macroporeuses à paroi externe dense et des sphères creuses macroporeuses à doubles parois interne et externe macroporeuses éventuellement en mélange avec des sphères pleines macroporeuses à paroi externe macroporeuse.

8. Matériau selon l'une quelconque des revendications précédentes, **caractérisé en ce qu'**il comprend en outre au moins un métal M et/ou un oxyde de métal M, ledit métal M étant choisi parmi le ruthénium, l'osmium, le strontium, l'étain, le tantale, le niobium, l'antimoine, le nickel, le calcium, le baryum, le cuivre, le cobalt, le platine, le titane, l'indium, le molybdène, le tungstène, l'or, le manganèse et le chrome.

9. Procédé de préparation d'un matériau tel que défini à l'une quelconque des revendications précédentes, **caractérisé en ce qu'**il comprend au moins les étapes suivantes :
i) la préparation d'une solution ou d'une suspension aqueuse comprenant au moins un précurseur d'iridium et au moins un agent porogène choisi parmi les polymères et copolymères organiques et un de leurs mélanges,
ii) l'atomisation de la solution ou de la suspension aqueuse obtenue à l'étape i) pour former des billes composites solides comprenant de l'iridium et l'agent porogène et/ou ledit matériau,
iii) la calcination des billes composites solides obtenues à l'étape ii) précédente si elles existent.

10. Procédé selon la revendication 9, **caractérisé en ce que** dans la solution ou suspension obtenue à l'issue de l'étape i), le rapport molaire nombre de moles de solvant aqueux/nombre de moles de précurseur d'iridium est compris entre 20 et 10000.

11. Procédé selon la revendication 9 ou 10, **caractérisé en ce que** dans la solution ou suspension obtenue à l'issue de l'étape i), le rapport molaire nombre de moles d'unités monomères de l'agent porogène/nombre de moles d'iridium varie de 0,0005 à 7.

12. Procédé selon l'une quelconque des revendications 9 à 11, **caractérisé en ce que** l'agent porogène est choisi parmi les homopolymères et les copolymères d'acrylate, de méthacrylate, d'oxyde d'éthylène, d'oxyde de méthylène, d'oxyde de propylène, d'épichlorhydrine, d'allylglycidyléther, de styrène, de butadiène et un de leurs mélanges.

13. Procédé selon l'une quelconque des revendications 9 à 12, **caractérisé en ce que** l'agent porogène est un polyméthacrylate de méthyle, un copolymère bloc d'oxyde d'éthylène et d'oxyde de propylène ou un de leurs mélanges.

14. Procédé selon l'une quelconque des revendications 9 à 13, **caractérisé en ce que** l'étape ii) d'atomisation comprend les sous-étapes suivantes :
ii-1) la pulvérisation de la solution ou de la suspension aqueuse obtenue à l'étape i), pour former des gouttelettes de ladite solution ou suspension aqueuse,
ii-2) le séchage des gouttelettes en présence d'un flux d'un gaz chaud, pour former des billes composites solides comprenant de l'iridium et l'agent porogène, et
ii-3) la collecte des billes composites solides et/ou dudit matériau.

15. Procédé selon la revendication 14, **caractérisé en ce que** la température lors du séchage de l'étape ii-2) varie de 35°C à 1000°C.

16. Procédé selon l'une quelconque des revendications 9 à 15, **caractérisé en ce que** l'étape de calcination iii) est effectuée à une température d'au moins 300°C et d'au plus 600°C.

17. Utilisation d'un matériau tel que défini à l'une quelconque des revendications 1 à 8 ou obtenu selon un procédé tel que défini à l'une quelconque des revendications 9 à 16, comme catalyseur anodique dans un électrolyseur à eau PEM.

18. Utilisation d'un matériau tel que défini à l'une quelconque des revendications 1 à 8 ou obtenu selon un procédé tel que défini à l'une quelconque des revendications 9 à 16, pour la fabrication de diodes électroluminescentes pour divers appareils électroniques ou pour les automobiles.

19. Électrolyseur à eau PEM comprenant à l'anode un matériau tel que défini à l'une quelconque des revendications 1 à 8 ou obtenu selon un procédé tel que défini à l'une quelconque des revendications 9 à 16.

## Patentansprüche

1. Anorganisches Material, umfassend Iridium und/oder Iridiumoxid IrO₂, **dadurch gekennzeichnet, dass** es makroporös ist und es in Form mikronischer oder submikronischer Sphären vorliegt.

2. Material nach Anspruch 1, **dadurch gekennzeichnet, dass** die Sphären einen mittleren Durchmesser aufweisen, der von 100 nm bis 40 µm schwankt.

3. Material nach Anspruch 1 oder 2, **dadurch gekennzeichnet, dass** die Sphären individuell sind.

4. Material nach einem der vorangehenden Ansprüche, **dadurch gekennzeichnet, dass** die Sphären eine Außenwand mit einer Dicke haben, die von 5 nm bis 6 µm schwankt.

5. Material nach einem der vorangehenden Ansprüche, **dadurch gekennzeichnet, dass** es eine spezifische Oberfläche hat, berechnet durch die B.E.T.-Methode, die von 20 bis 200 m²/g schwankt.

6. Material nach einem der vorangehenden Ansprüche, **dadurch gekennzeichnet, dass** es ein makroporöses Volumen hat, das von 0,15 bis 2 cm³/g schwankt.

7. Material nach einem der vorangehenden Ansprüche, **dadurch gekennzeichnet, dass** die Sphären aus makroporösen vollen Sphären mit makroporöser Außenwand, makroporösen hohlen Sphären mit dichter Außenwand und makroporösen hohlen Sphären mit doppelten makroporösen Innen- und Außenwänden gegebenenfalls gemischt mit makroporösen vollen Sphären mit makroporöser Außenwand ausgewählt sind.

8. Material nach einem der vorangehenden Ansprüche, **dadurch gekennzeichnet, dass** es ferner mindestens ein Metall M und/oder ein Metalloxid M umfasst, wobei das Metall M aus Ruthenium, Osmium, Strontium, Zinn, Tantal, Niobium, Antimon, Nickel, Calcium, Barium, Kupfer, Kobalt, Platin, Titan, Indium, Molybdän, Wolfram, Gold, Mangan und Chrom ausgewählt ist.

9. Verfahren zur Herstellung eines Materials nach einem der vorangehenden Ansprüche, **dadurch gekennzeichnet, dass** es mindestens die folgenden Schritte umfasst:
i) das Herstellen einer Lösung oder einer wässrigen Suspension, die mindestens einen Iridiumvorläufer und mindestens einen Porenbildner umfasst, der aus den organischen Polymeren und Copolymeren und einem ihrer Gemische ausgewählt ist,
ii) das Zerstäuben der in Schritt i) gewonnenen Lösung oder der wässrigen Suspension, um feste Kompositkugeln zu bilden, die Iridium und den Porenbildner und/oder das Material umfassen,
iii) das Calcinieren der in vorhergehendem Schritt ii) erhaltenen festen Kompositkugeln, sofern es sie gibt.

10. Verfahren nach Anspruch 9, **dadurch gekennzeichnet, dass** das Molverhältnis Anzahl der Mole wässriges Lösungsmittel/Anzahl der Mole Iridiumvorläufer in der nach Schritt i) erhaltenen Lösung oder Suspension zwischen 20 und 10000 liegt.

11. Verfahren nach Anspruch 9 oder 10, **dadurch gekennzeichnet, dass** das Molverhältnis Anzahl der Mole der Monomereinheiten des Porenbildners/Anzahl der Iridiummole in der nach Schritt i) erhaltenen Lösung oder Suspension von 0,0005 bis 7 schwankt.

12. Verfahren nach einem der Ansprüche 9 bis 11, **dadurch gekennzeichnet, dass** der Porenbildner aus den Acrylat-, Methacrylat-, Ethylenoxid-, Methylenoxid-, Propylenoxid-, Epichlorhydrin-, Allylglycidylether-, Styrol-, Butadien-Homopolymeren und -Copolymeren und einem ihrer Gemische ausgewählt ist.

13. Verfahren nach einem der Ansprüche 9 bis 12, **dadurch gekennzeichnet, dass** der Porenbildner ein Polymethylmethacrylat, ein Ethylenoxid- und Propylenoxid-Blockcopolymer oder eins ihrer Gemische ist.

14. Verfahren nach einem der Ansprüche 9 bis 13, **dadurch gekennzeichnet, dass** der Zerstäubungsschritt ii) die folgenden Unterschritte umfasst:
ii-1) das Sprühen der in Schritt i) erhaltenen Lösung oder der wässrigen Suspension, um aus der Lösung oder wässrigen Suspension Tröpfchen zu bilden,
ii-2) das Trocknen der Tröpfchen in Gegenwart eines Warmluftstroms, um feste Kompositkugeln zu bilden, die Iridium und den Porenbildner umfassen, und
ii-3) das Sammeln der festen Kompositkugeln und/oder des Materials.

15. Verfahren nach Anspruch 14, **dadurch gekennzeichnet, dass** die Temperatur beim Trockenen in Schritt ii-2) von 35 °C bis 1000 °C schwankt.

16. Verfahren nach einem der Ansprüche 9 bis 15, **dadurch gekennzeichnet, dass** der Calcinierungsschritt iii) bei einer Temperatur von mindestens 300 °C und höchstens 600 °C durchgeführt wird.

17. Verwendung eines Materials wie nach einem der Ansprüche 1 bis 8 definiert oder wie nach einem Verfahren gewonnen, wie nach einem der Ansprüche 9 bis 16 definiert, als anodischer Katalysator in einem PEM-Wasserelektrolyseur.

18. Verwendung eines Materials, wie nach einem der Ansprüche 1 bis 8 definiert, oder wie nach einem Verfahren gewonnen, wie nach einem der Ansprüche 9 bis 16 definiert, zur Herstellung von elektrolumineszierenden Dioden für diverse elektronische Geräte oder für Automobile.

19. PEM-Wasserelektrolyseur, umfassend an der Anode ein Material wie nach einem der Ansprüche 1 bis 8 definiert oder wie nach einem Verfahren gewonnen, wie nach einem der Ansprüche 9 bis 16 definiert.

## Claims

1. - An inorganic material comprising iridium and/or iridium oxide IrO₂, **characterized in that** it is microporous and is in the form of micronic or submicronic spheres.

2. - The material according to claim 1, **characterized in that** the spheres have a mean diameter varying from 100 nm to 40 µm.

3. - The material according to claim 1 or 2, **characterized in that** the spheres are individual.

4. - The material according to any of the preceding claims, **characterized in that** the spheres have an outer wall of thickness varying from 5 nm to 6 µm.

5. - The material according to any of the preceding claims, **characterized in that** it has a specific surface area calculated with the BET method varying from 20 to 200 m²/g.

6. - The material according to any of the preceding claims, **characterized in that** it has a microporous volume varying from 0.15 to 2 cm³/g.

7. - The material according to any of the preceding claims, **characterized in that** the spheres are selected from among solid microporous spheres with microporous outer wall, hollow microporous spheres with dense outer wall, and hollow microporous spheres with microporous inner and outer double walls optionally in a mixture with solid microporous spheres with microporous outer wall.

8. - The material according to any of the preceding claims, **characterized in that** it further comprises at least one metal M and/or an oxide of a metal M, said metal M being selected from among ruthenium, osmium, strontium, tin, tantalum, niobium, antimony, nickel, calcium, barium, copper, cobalt, platinum, titanium, indium, molybdenum, tungsten, gold, manganese and chromium.

9. - A process for preparing a material such as defined in any of the preceding claims, **characterized in that** it comprises at least the following steps:
i) preparing an aqueous solution or suspension comprising at least one precursor of iridium and at least one pore-forming agent selected from among organic polymers and copolymers, and one of the mixtures thereof;
ii) atomizing the aqueous solution or suspension obtained at step i) to form solid composite beads comprising iridium and the pore-forming agent, and/or said material;
iii) calcining the solid composite beads, if any, obtained at preceding step ii)

10. - The process according to claim 9, **characterized in that** in the solution or suspension obtained after step i), the molar ratio of number of moles of aqueous solvent/number of moles of iridium precursor is between 20 and 10000.

11. - The process according to claim 9 or 10, **characterized in that** in the solution or suspension obtained after step i), the molar ratio of number of moles of monomer units of the pore-forming agent/ number of moles of iridium varies from 0.0005 to 7.

12. - The process according to any of claims 9 to 11, **characterized in that** the pore-forming agent is selected from among the homopolymers and copolymers of acrylate, methacrylate, ethylene oxide, methylene oxide, propylene oxide, epichlorohydrin, allyl glycidyl ether, styrene, butadiene and one of the mixtures thereof.

13. - The process according to any of claims 9 to 12, **characterized in that** the pore-forming agent is a methyl polymethacrylate, a block copolymer of ethylene oxide and propylene oxide, or one of the mixtures thereof.

14. - The process according to any of claims 9 to 13, **characterized in that** the atomizing step ii) comprises the following sub-steps:
ii-1) spraying the aqueous solution or suspension obtained at step i), to form droplets of said aqueous solution or suspension;
ii-2) drying the droplets in the presence of a stream of hot gas, to form solid composite beads comprising iridium and the pore-forming agent; and
ii-3) collecting the solid composite beads and/or said material.

15. - The process according to claim 14, **characterized in that** the temperature when drying at step ii)-2) varies from 35 °C to 1000 °C.

16. - The process according to any of claims 9 to 15, **characterized in that** the calcining step iii) is conducted at a temperature of at least 300 °C and at most of 600 °C.

17. - Use of a material such as defined in any of claims 1 to 8 or obtained with a process such as defined in any of claims 9 to 16, as anodic catalyst in a PEM water electrolyzer.

18. - Use of a material such as defined in any of claims 1 to 8 or obtained with a process such as defined in any of claims 9 to 16, for the fabrication of light emitting diodes for various electronic appliances, or for automotive vehicles.

19. - A PEM water electrolyzer comprising at the anode a material such as defined in any of claims 1 to 8 or obtained with a process such as defined in any of claims 9 to 16.
